# EUROPEAN PATENT APPLICATION

(11) **EP 4 553 749 A1**
(43) Date of publication of application: **14.05.2025**
(21) Application number: 23854975.2
(22) Date of filing: 17.05.2023
(51) Int. Cl.: G06Q 50/10, G06T 13/40, G06F 1/16, G06V 40/16, G06V 40/20, G10L 15/02, G10L 17/22

(54) **ELECTRONIC DEVICE AND METHOD FOR PROVIDING CONVERSATION FUNCTION BY USING AVATAR**

(30) Priority: 17.08.2022 KR 20220102399; 11.10.2022 KR 20220129788
(71) Applicant: Samsung Electronics Co., Ltd., Suwon-si, Gyeonggi-do 16677 (KR)
(72) Inventor: SUNG, Wonkyu, Suwon-si, Gyeonggi-do 16677 (KR); KIM, Moonjeong, Suwon-si, Gyeonggi-do 16677 (KR); KIM, Youngrog, Suwon-si, Gyeonggi-do 16677 (KR); KIM, Taeyeong, Suwon-si, Gyeonggi-do 16677 (KR); SONG, Taeyang, Suwon-si, Gyeonggi-do 16677 (KR); YOO, Jonghyuck, Suwon-si, Gyeonggi-do 16677 (KR); LEE, Changhan, Suwon-si, Gyeonggi-do 16677 (KR); PARK, Jihea, Suwon-si, Gyeonggi-do 16677 (KR); HONG, Hyunju, Suwon-si, Gyeonggi-do 16677 (KR)
(74) Representative: Nederlandsch Octrooibureau
(86) International application number: PCT/KR2023/006655
(87) International publication number: WO 2024/039002

(57) **Abstract**

Embodiments of the disclosure relate to an electronic device and method for providing a conversation function using an avatar in a virtual space. The electronic device may output a first conversation screen using an avatar based on data collected from an external electronic device based on a network environment. The electronic device may identify a speaker among participants based on the collected data, change the camera angle with respect to a speaker avatar corresponding to the identified speaker, and configure a second conversation screen.

## Description

### [Technical Field]

Embodiments of the disclosure relate to an electronic device and method for providing a conversation function using an avatar in a virtual space.

### [Background Art]

Electronic devices, such as smart phones, mobile phones, and tablet devices, may be representative examples of electronic devices that are easily carried by users. Application programs for providing various functions may be installed on the electronic device. The electronic device may execute an installed application program in response to the user's manipulation. The electronic device may display information according to the execution of an application program through a display.

The electronic device allows the user to use functions, such as a game, shopping, or chatting using an avatar in a virtual space, based on a network environment. The avatar function provided by the electronic device in the virtual space based on the network environment is limited to the extent to which the avatar moves or communicates through voice or text on behalf of the user.

Therefore, it may fall short of providing a natural communication experience to the user by applying the user's characteristics, such as motion or gestures in conversation.

### [Disclosure]

### [Technical Solution]

According to an embodiment, an electronic device comprises a camera module including a front camera and configured to output an electrical signal obtained by capturing a subject, a display module including a display panel or a touch panel and configured to display an image on the display panel or output an electrical signal according to a touch on the touch panel, a communication module configured to perform communication with an external electronic device based on a network environment, and at least one processor configured to control an operation of the camera module, the display module, or the communication module by an electrical connection with the camera module, the display module, or the communication module.

According to an embodiment, the at least one processor controls the display module to display an avatar of at least one participant among a plurality of participants including a user of the electronic device in a virtual space provided for a conversation function, display an utterance indicator indicating an utterance state in response to an utterance of at least one speaker among the plurality of participants, and display the avatar whose gaze is changed in the virtual space based on the utterance of the at least one speaker.

According to an embodiment, a method for providing a conversation function using an avatar in an electronic device comprises displaying an avatar of at least one participant among a plurality of participants including a user of the electronic device in a virtual space provided for the conversation function, displaying an utterance indicator indicating an utterance state in response to an utterance of at least one speaker among the plurality of participants, and displaying the avatar whose gaze is changed in the virtual space based on the utterance of the at least one speaker.

According to an embodiment, an electronic device comprises a front camera and a camera module configured to output an electrical signal obtained by capturing a subject. The electronic device comprises a display module including a display panel or a touch panel and configured to display an image on the display panel or output an electrical signal according to a touch on the touch panel. The electronic device comprises a communication module configured to perform communication with an external electronic device based on a network environment. The electronic device comprises at least one processor configured to control an operation of the camera module, the display module, or the communication module by an electrical connection with the camera module, the display module, or the communication module.

According to an embodiment, the at least one processor identifies a speaker switch among participants of a conversation using avatars based on data collected from the external electronic device through the communication module. The at least one processor configures a first conversation screen at a camera angle changed with respect to a speaker avatar corresponding to the switched speaker. The at least one processor controls the display module to display the first conversation screen on the display panel.

According to an embodiment, a method for providing a conversation function using an avatar in an electronic device comprises outputting a first conversation screen using an avatar based on data collected from an external electronic device based on a network environment. The method comprises identifying a speaker among participants based on the collected data. The method comprises configuring a second conversation screen by changing a camera angle with respect to a speaker avatar corresponding to the identified speaker. The method comprises switching the first conversation screen to the second conversation screen and outputting the second conversation screen.

### [Brief Description of the Drawings]

FIG. 1 is a view illustrating a configuration of a system for providing an avatar conversation function in a network environment according to an embodiment;
FIG. 2 is a view illustrating a control flow for providing an avatar conversation function in a system according to an embodiment;
FIG. 3 is a view illustrating a signal flow for providing an avatar conversation function in a system according to an embodiment;
FIG. 4 is a view illustrating a control flow for performing an avatar-based conversation function in an electronic device according to an embodiment;
FIG. 5 is a view illustrating a control flow for performing an avatar-based conversation function in an operating server according to an embodiment;
FIG. 6 is a view illustrating a signal flow for performing an avatar conversation subroutine in a system according to an embodiment;
FIG. 7 is a view illustrating a signal flow for performing an avatar conversation subroutine in a system according to an embodiment;
FIG. 8 is a view illustrating a signal flow for performing an avatar conversation subroutine in a system according to an embodiment;
FIG. 9 is a view illustrating a signal flow for performing an avatar conversation subroutine in a system according to an embodiment;
FIG. 10 is a view illustrating a control flow for configuring a conversation screen of an avatar conversation function in an electronic device according to an embodiment;
FIG. 11 is a block diagram illustrating a configuration of an electronic device according to an embodiment;
FIG. 12 is a view illustrating an example user interface UI for each procedure opening an avatar-based chat room in an electronic device according to an embodiment;
FIG. 13 illustrates an example user interface provided before entering a chat room for an avatar-based conversation function in an electronic device according to an embodiment;
FIG. 14 illustrates an example of an angle change corresponding to a speaker switch in an electronic device according to an embodiment;
FIGS. 15A and 15B illustrate an example of an angle change corresponding to manual manipulation in an electronic device according to an embodiment;
FIG. 16 illustrates an example of a field-of-view change corresponding to a configuration requirement in an electronic device according to an embodiment;
FIG. 17 illustrates an example of a view (field-of-view) switch responsive to manual manipulation in an electronic device according to an embodiment;
FIGS. 18A and 18B illustrate an example of mirroring a user's motion to an avatar using an image captured by a camera in an electronic device according to an embodiment;
FIGS. 19A, 19B, and 19C illustrate examples of motion preset to be applicable to an avatar in an electronic device according to an embodiment;
FIGS. 20A to 20E illustrate an example of changing a screen shape considering the number of participants in an electronic device according to an embodiment;
FIG. 21 illustrates an example of invoking the other party's avatar by manual manipulation in an electronic device according to an embodiment;
FIG. 22 illustrates an example of recording a conversation screen at the user's request in an electronic device according to an embodiment;
FIG. 23 is a view illustrating a signal flow for providing a gift event during a conversation using an avatar in a system according to an embodiment;
FIGS. 24A to 24I are views illustrating an example user interface (UI) for each procedure for transferring a gift on a conversation screen using an avatar according to an embodiment; and
FIG. 25 is a block diagram illustrating an electronic device in a network environment according to various embodiments.

### [Mode for Invention]

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

The same or similar reference numbers may be used to denote the same or similar elements throughout the specification and the drawings.

An embodiment of the disclosure may provide an electronic device and a control method thereof, which adjust the angle or field-of-view of a camera for preparing a conversation screen with respect to an avatar corresponding to a speaker in a virtual space based on a network environment.

According to an embodiment of the disclosure, an electronic device may prepare a conversation screen with respect to an avatar corresponding to a speaker in a virtual space, allowing the user to have a natural experience as if she talks to the other party in person.

The technical objects of the disclosure are not limited to the foregoing, and other technical objects may be derived by one of ordinary skill in the art from example embodiments of the disclosure.

Effects of the disclosure are not limited to the foregoing, and other unmentioned effects would be apparent to one of ordinary skill in the art from the following description. In other words, unintended effects in practicing embodiments of the disclosure may also be derived by one of ordinary skill in the art from the embodiments of the disclosure.

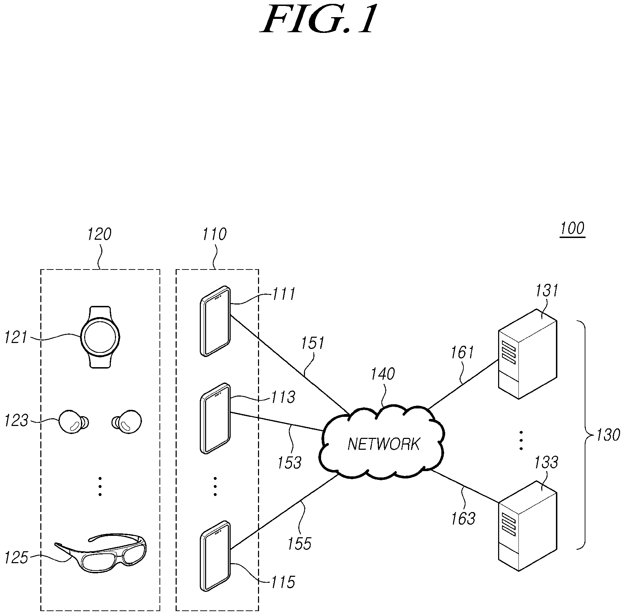

FIG. 1 is a view illustrating a configuration of a system 100 for providing an avatar conversation function in a network environment according to an embodiment.

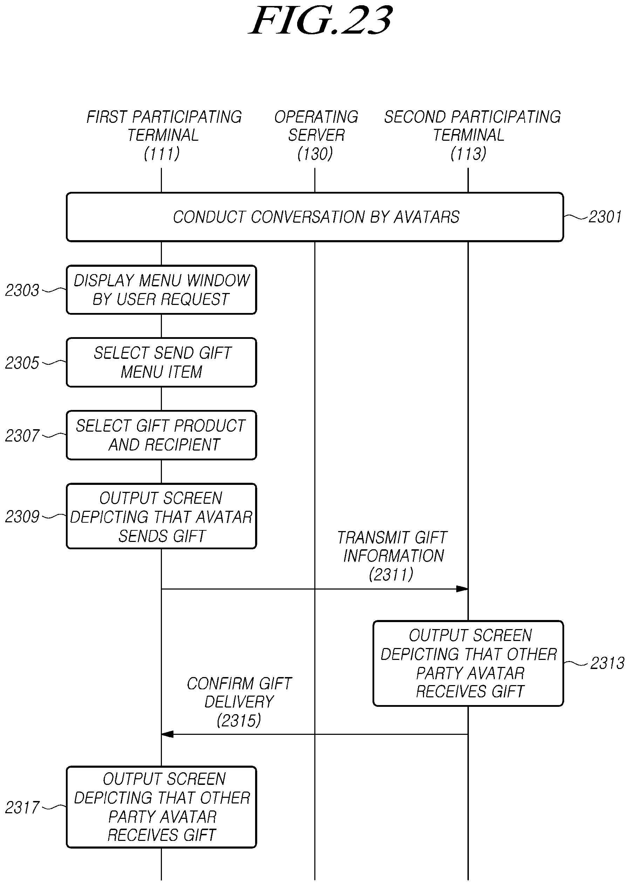

Referring to FIG. 1, a system 100 for providing an avatar conversation function may include a plurality of electronic devices (e.g., the electronic devices 2501, 2502, and 2504 of FIG. 23). The plurality of electronic devices 2501, 2502, and 2504 may include a plurality of electronic devices 110 or a plurality of wearable devices 120. The system 100 may include one or more servers 130. The plurality of electronic devices 110 may transmit data to and/or receive data from the server 130 via a network 140 that provides a communication channel utilizing wireless or wired resources.

Referring to FIG. 1, according to an embodiment, the system 100 for providing an avatar conversation function may include a plurality of electronic devices (e.g., the electronic devices 2501, 2502, and 2504 of FIG. 23) or a server 130. The plurality of electronic devices 2501, 2502, and 2504 may include a plurality of electronic devices 110 or a plurality of wearable devices 120. The plurality of electronic devices 110 may include first to nth electronic devices 111, 113, and 115. The first to nth electronic devices 111, 113, and 115 may be the same or different types of devices. The first to nth electronic devices 111, 113, and 115 may be devices, such as a smartphone or tablet PC, capable of installing applications, executing the installed applications, and utilizing the functions provided by the executed applications. The plurality of wearable devices 120 may include various types of wearable devices, such as a smart watch 121, wireless earphones 123, or smart glasses 125. The plurality of wearable devices 120 may manage information, such as the user's physical condition, exercise amount, or motion, or provide functions, such as listening to music or a virtual space to the user. The server 130 may include heterogeneous servers 131 and 133 providing the same or different functions. The heterogeneous servers 131 and 133 included in the server 130 may include an authorization server, a matching server, an operating server, a present server, or an asset server. The authentication server may verify the user's eligibility for access and issue an access authorization. The matching server may provide an API through which the user may create and register an operating server. The matching server may provide a list to participate in the operation server. The matching server may manage status information about users. The matching server may transmit an invitation message to the user. The operating server may collect real-time data. Users accessing the operation server may upload or download data. The operating server may be implemented to be executed on the electronic device 110 or an external server. The asset server may provide data, such as a mesh and texture, capable of rendering an avatar or a background. The heterogeneous servers may be modularized and added to one server.

For convenience of description below, the plurality of electronic devices 111, 113, and 115 will be collectively referred to as the electronic device 110, and the plurality of wearable devices 121, 123, and 125 will be collectively referred to as the wearable device 120.

The electronic device 110 may exchange data for the avatar conversation function with another electronic device or the server 130 via a network 140 (e.g., first network 2598 or second network 2599 of FIG. 23) operated based on one or more protocols. The one or more protocols may be protocols provided to perform communication in a network environment, such as a short-range communication network (e.g., the first network 2598 of FIG. 23) or a long-range communication network (e.g., the second network 2599 of FIG. 23). The protocols provided for the short-range communication network may include, e.g., Bluetooth, Wi-Fi direct or IrDA. The long-range communication networks may include, e.g., a legacy cellular network, a 5G network, a next-generation telecommunication network, the Internet, or a computer network (e.g., LAN or a remote communication network such as WAN).

The electronic device 110 may be connected to the wearable device 120 through a predetermined connection procedure. The connection procedure may be performed according to a protocol provided for each communication scheme. The per-communication scheme protocols may be protocols provided to perform communication in a network environment, such as a short-range communication network (e.g., the first network 2598 of FIG. 23) or a long-range communication network (e.g., the second network 2599 of FIG. 23). The protocols provided for the short-range communication network may include, e.g., Bluetooth, Wi-Fi direct or IrDA. The long-range communication networks may include, e.g., a legacy cellular network, a 5G network, a next-generation telecommunication network, the Internet, or a computer network (e.g., LAN or a remote communication network such as WAN).

Based on the network environment 140, the electronic device 110 may collect data for an avatar conversation function from another electronic device, the wearable device 120, or the server 130 that is an external electronic device. Based on the collected data, the electronic device 110 may output a first conversation screen using an avatar through a display. The electronic device 110 may identify the speaker from among participants based on the collected data. The electronic device 110 may configure a second conversation screen by switching the camera angle, the field-of-view, or the screen view with respect to the speaker avatar corresponding to the identified speaker. The electronic device 110 may switch the conversation screen for the avatar conversation function from the first conversation screen to the second conversation screen and output the same.

The electronic device 110 may obtain voice characteristics of the participants based on the participants' voice data included in the collected data. The electronic device 110 may predict the participant having obtained voice characteristics using information regarding preset reference voice characteristics. The electronic device 110 may determine the avatar of the predicted participant among the avatars participating in the conversation as the speaker avatar.

When a chat room using avatars is opened and a conversation is conducted by participants, the electronic device 110 may collect voice data of the participants every predetermined time or predetermined period. The electronic device 110 may obtain information regarding the reference voice characteristics for each participant using the collected voice data. The electronic device 110 may register the obtained per-participant reference voice characteristic information.

The electronic device 110 may configure the conversation screen at the camera angle changed based on an electrical signal provided by the user's swipe on the touch screen. The electronic device 110 may output the conversation screen through the display.

The electronic device 110 may configure the conversation screen at a camera angle changed based on an electrical sensing signal obtained by the user's motion in left/right or up/down direction. The electronic device 110 may output the conversation screen through the display.

The electronic device 110 may adjust or change the field-of-view of the conversation screen based on the data collected. The electronic device 110 may configure a conversation screen to which the adjusted or changed field-of-view is applied. The electronic device 110 may output the conversation screen through the display.

The electronic device 110 may switch the conversation screen to a conversation screen in which the specific avatar is zoomed in, if the speaking time of a specific avatar does not exceed a threshold time. The electronic device 110 may switch into a conversation screen in which a specific object is zoomed in in response to the user's swipe. The electronic device 110 may switch into a conversation screen in which the specific avatar is zoomed out when the speaking time of the specific avatar exceeds the threshold time. The electronic device 110 may switch into a conversation screen in which a specific object is zoomed out in response to the user's swipe.

The electronic device 110 may obtain a facial expression or gesture from the user's image captured by the front camera and mirror the obtained facial expression or gesture to the user's avatar included in the conversation screen. The electronic device 110 may obtain the facial expressions or gestures of the participants from the collected data and mirror the obtained facial expressions or gestures of the participants to the avatars of the participants included in the conversation screen.

The electronic device 110 may adjust the field-of-view considering the number of participants and output a conversation screen prepared at the adjusted field-of-view. When the user detects touching the avatar of one of the participants, the electronic device 110 may transmit a signal to invoke the external electronic device corresponding to the touched avatar. The electronic device 110 may extract images corresponding to the conversation based on the collected data, generate a conversation record image using the extracted images, and store the generated conversation record image.

The server 130 may open a chat room to provide an avatar-based conversation function in response to a request from the electronic device 110. The server 130 may send a request for joining the chat room to the electronic device 110 of the guest to be invited to the opened chat room. The server 130 may configure a conversation screen appropriate for each electronic device 110 based on the data collected from the electronic device 110 and transfer information regarding the configured conversation screen to the corresponding electronic device 110.

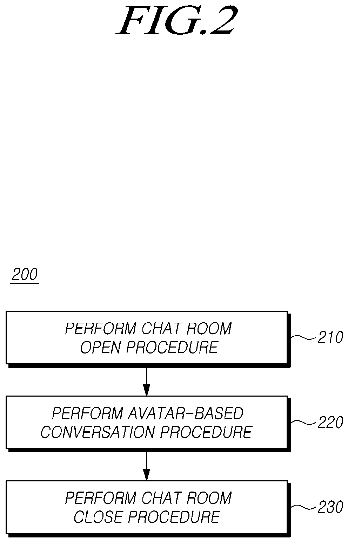

FIG. 2 is a view illustrating a control flow 200 for providing an avatar conversation function in a system (e.g., the system 100 of FIG. 1).

Referring to FIG. 2, in an embodiment, the system 100, in operation 210, may perform a procedure for opening a chat room. As an embodiment, the procedure for opening a chat room may include a chat room creation procedure for providing a chat room or a chat room entry procedure for participants to enter the chat room. The participants may include, e.g., the host who opened the chat room or at least one guest requested to participate in the chat room.

The chat room creation procedure may include a request procedure for the electronic device corresponding to the host (e.g., the first electronic device 111 of FIG. 1) (hereinafter referred to as a "host terminal 111") to request the operating server (e.g., the operating server 130 of FIG. 1) to open a chat room. The chat room creation procedure may include a creation procedure in which the operating server 130 creates a chat room in response to the request. The chat room may correspond to, e.g., a virtual space in which avatars may have a conversation on behalf of participants.

The chat room entry procedure may include a calling procedure in which the operation server 130 calls the electronic device (e.g., the second electronic device 113 or the nth electronic device 115 of FIG. 1) (hereinafter referred to as a "guest terminal 113 or 115") corresponding to the guest whose participation in the conversation is requested by the host terminal 111. The chat room entry procedure may include a response procedure in which the guest terminals 113 and 115 enter the chat room in response to a call from the operating server 130. The host terminal 111 and the guest terminal 113 or 115 may be collectively referred to as a "participating terminal" (e.g., the electronic device 110 of FIG. 1) that has entered the chat room for conversation.

In one embodiment, the system 100 may perform an avatar-based conversation procedure, in operation 220. The avatar-based conversation procedure may include an avatar setting procedure of setting a host avatar to represent the host or a guest avatar to represent the guest in the chat room. The host avatar or the guest avatar may be collectively referred to as a 'participating avatar' representing the participant of the conversation. Information about the participating avatars may be shared between the participating terminals 110, for example.

The avatar-based conversation procedure may include a screen configuration procedure for configuring a conversation screen on which a conversation is to be conducted by participating avatars. The conversation screen may be configured for each participant based on information collected by the operating server 130 from the participants (e.g., host or guest) through the participating terminal 110, for example. The conversation screen configured for each participant by the operating server 130 may be provided to the corresponding participating terminal 110. The conversation screen configured for each participant may be provided, e.g., from the viewpoint of the participant. For example, the conversation screen may be configured based on information collected by the participating terminal (e.g., the host terminal 111) from another participating terminal (e.g., the guest terminal 113 or 115). The conversation screen configured by the participating terminal 110 may reflect the user's request in real-time regardless of the opinions of other participants.

The avatar-based conversation procedure may include a motion (e.g., facial expression, gaze or body motion, such as of a hand, arm, neck, or leg) of the participating avatar on the conversation screen or a conversation execution procedure for conducting the conversation between participating avatars, The conversation between the participating avatars may be performed using, e.g., natural language, such as voices of the participants or text converted from the voices of the participants. As an embodiment, in the conversation execution procedure, at least one speaker among the participants may be identified and the conversation screen may be changed with respect to the avatar of the at least one speaker (hereinafter referred to as a "speaker avatar").

The change of the conversation screen may be, e.g., configuring a conversation screen in which the gaze of the avatar corresponding to the listener (hereinafter referred to as a "listener avatar") is changed toward the speaker avatar. The change of the conversation screen may be, e.g., configuring a conversation screen changed to reflect (e.g., mirror) the participants' motion (e.g., facial expression, gaze, or body motion such as of a hand, arm, neck, or leg). The motion of the participants may be obtained, e.g., from the user's image captured through a camera. The motion of the participants may be obtained by, e.g., sensing information measured by a sensor (e.g., a gyroscope sensor) provided in the electronic device 110. The motion of the participants may be obtained, e.g., by sensing information measured by a sensor (e.g., a gyroscope sensor) provided in a wearable device (e.g., the wearable device 120 of FIG. 1).

The change of the conversation screen may be, e.g., configuring a conversation screen with the camera angle changed to allow the speaker avatar positioned in the center. The change of the conversation screen may be, e.g., configuring a conversation screen with the camera angle is rotated about the speaker avatar in a specific direction (e.g., left/right direction, up/down direction, clockwise or counterclockwise). The camera angle may correspond to, e.g., a direction towards the participants conversing in the virtual space.

The change of the conversation screen may be, e.g., configuring a conversation screen with the field-of-view changed. The field-of-view may be, e.g., a narrow field-of-view in which the conversation screen is focused on a specific object (e.g., speaker avatar), or a wide field-of-view in which the conversation screen encompasses all the objects (e.g., participating avatars). An operation of changing the field-of-view configuring the conversation screen into a narrow field-of-view may correspond to a zoom-in operation. An operation of changing the field-of-view configuring the conversation screen into a wide field-of-view may correspond to a zoom-out operation.

In the above examples, the angle or field-of-view for changing the conversation screen may be a condition for changing the view of the conversation screen, for example. The condition for changing the view of the conversation screen may include a screen type, such as a landscape screen or a portrait screen. The view type, which is the screen type, may be determined considering the shape in which the user holds the electronic device and/or the number of participating avatars to be included in the screen.

In an embodiment, the system 100, in operation 230, may perform a procedure for closing the chat room. As an example, the procedure for closing the chat room may include a leaving procedure in which a specific participant leaves or a closing procedure in which all participants leave. The participants may include, e.g., the host who opened the chat room or at least one guest participating in the chat room.

The leaving procedure may be performed, e.g., in such a manner that the guest terminal (e.g., the first electronic device 113 of FIG. 1) corresponding to a specific participant among the participants in the conversation requests the operating server 130 to leave, and the operating server 130 approves it. The operating server 130 may ask other participating terminals (e.g., the host terminal 111) whether they agree to let the corresponding participant leave before approving the guest terminal 113 to leave.

The closing procedure may be performed, e.g., in such a manner that the host terminal (e.g., the first electronic device 1111 of FIG. 1) requests the operating server 130 to close the chat room, and the operating server 130 approves it. Before approving the closure of the chat room, the operating server 130 may receive confirmation of the closure of the chat room from the guest terminals (e.g., the Nth guest terminal 115) that remain without leaving the chat room.

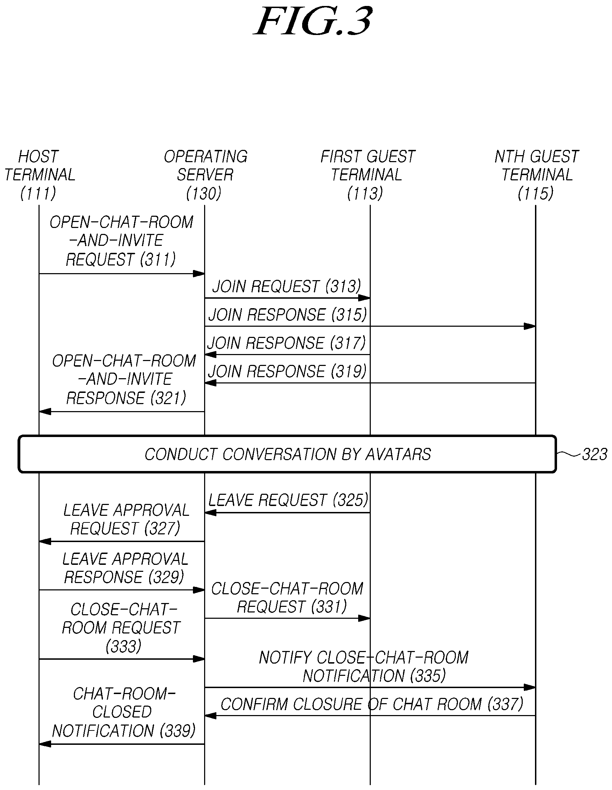

FIG. 3 is a view illustrating a signal flow for providing an avatar conversation function in a system (e.g., the system 100 of FIG. 1).

Referring to FIG. 3, the host device 111 may request the operating server 130 to open a chat room and/or invite guests in operation 311. The host device 111 may provide, e.g., information about a chat room to be opened (e.g., a chat room name or password) to the operating server 130 to request opening of a chat room. For example, to invite a guest to the chat room, the host terminal 111 may provide information about a guest to be invited (e.g., the participant's phone number or participant's ID) to the operating server 130.

Upon receipt of the chat room opening and invitation request from the host device 111, the operating server 130 may request the first guest terminal 113 (e.g., the second electronic device 113 of FIG. 1) and/or the nth guest terminal 115 (e.g., the nth electronic device 115 of FIG. 1), which is the terminal of the guest to be invited to the chat room, to join the chat room in operation 313 or operation 315. The operating server 130 may include information (e.g., chat room name) about the chat room in the join request message transmitted to, e.g., the first guest terminal 113 and/or the nth guest terminal 115. The information about the chat room may be link information (e.g., URL information) for joining the chat room.

The first guest terminal 113 and/or nth guest terminal 115 which is the guest terminal invited to the chat room may respond to the joining of the chat room opened by the operating server 130 in operation 317 or 319. The first guest terminal 113 and/or nth guest terminal 115 may output the link information (e.g., URL information) provided to request to join by the operating server 130, through the display, and when the user touches the link information output through the display, a response message to agree to join may be transmitted to the operating server 130.

If the response by all the guest terminals (e.g., the first guest terminal 113 and/or the nth guest terminal 115) invited is complete after the chat room has been opened, the operating server 130 may perform a chat room opening and invitation response to the host terminal 111 in operation 321. The operating server 130 may transfer information about the chat room and/or information about the participating guests to the host terminal 111, e.g., if a conversation becomes available.

The participating terminals 110 (e.g., the host terminal 111, the first guest terminal 113, and/or the nth guest terminal 115) that have joined the chat room may conduct a conversation with avatars in operation 323. To carry out a conversation by avatars, the operating server 130 may set participating avatars including the host avatar or the guest avatar. The operating server 130 may share the information about participating avatars with the participating terminals 110.

According to an embodiment, the participating terminals 110 (e.g., the host terminal 111, the first guest terminal 113, and/or the nth guest terminal 115) may configure a conversation screen based on the information collected through the operating server 130 or directly collected from other participating terminals. The conversation screen configured by the participating terminal 110 may reflect the user's request in real-time regardless of the opinions of other participants. The participating terminals 110 may change the conversation screen considering an event, such as a change of speaker, manual manipulation of a participant, or motion of a participant. To change the conversation screen, the participating terminals 110 may exchange information about an event with each other. In an embodiment, the participating terminals 110 may identify the speaker who is currently speaking based on the participants' voice data or images captured for the participants. The participating terminals 110 may newly configure the conversation screen by changing the angle and/or field-of-view based on the identified speaker. In an embodiment, the participating terminal 110 may newly configure the conversation screen by changing the angle and/or field-of-view in response to the participant's (or user's) manual manipulation. As an embodiment, the participating terminal 110 may obtain the motion of participants (e.g., host or guest) from the image captured by itself or captured by another participating terminal and newly configure the conversation screen reflecting the obtained motion. In an embodiment, the participating terminal 110 may obtain the motions of the participants (e.g., host or guest) based on an internal sensing signal or an external sensing signal provided by another participating terminal and newly configure the conversation screen reflecting the obtained motion.

According to an embodiment, the operating server 130 may configure a conversation screen for each participant based on information collected from the participating terminals 110. The operating server 130 may provide the conversation screen configured for each participant to the corresponding participating terminal 110. The operating server 130 may change the conversation screen for each participant, considering an event, such as a change of speaker, manual manipulation of a participant, or motion of a participant. To change the conversation screen, the operating server 130 may collect information about events occurring in the participating terminals 110. In an embodiment, the operating server 130 may identify the speaker who is currently speaking based on the participants' voice data or images captured for the participants. The operating server 130 may newly configure the conversation screen for each participant by changing the angle and/or field-of-view based on the identified speaker. In an embodiment, the operating server 130 may newly configure the conversation screen, to be provided to the participating terminals 110, by changing the angle and/or field-of-view in response to the participant's (or user's) manual manipulation. As an embodiment, the operating server 130 may obtain the motion of participants (e.g., host or guest) from the image captured by the participating terminals and newly configure the conversation screen, for each participant, reflecting the obtained motion. In an embodiment, the operating server 130 may obtain the motions of the participants (e.g., host or guest) based on the sensing signals provided by the participating terminals 110 and newly configure the conversation screen, for each participant, reflecting the obtained motion. The operating server 130 may provide information about the newly configured conversation screen to the participating terminals 110.

When the guest terminal (e.g., the first guest terminal 113) is requested to leave the chat room by the user, in operation 325, the guest terminal 113 may request the operating server 130 for leaving. Upon receiving the leave request from the first guest terminal 113, the operating server 130 may transfer a leave approval request to the host terminal 111 to indicate that the first guest terminal 113 has requested the leave request in operation 327. In operation 329, the host terminal 111 may transfer a leave approval response to agree to leaving of the first guest terminal 113 to the operating server 130. Although not shown, the operating server 130 may also transfer the exit approval request to the nth guest terminal 115, which is another guest terminal, to indicate that the first guest terminal 113 has requested to leave. The nth guest terminal 115 may transfer the leave approval response to agree to leaving of the first guest terminal 113 to the operating server 130.

If it is requested to end the conversation by the user, the host terminal 111 may request the operating server 130 to close the chat room in operation 333. When receiving a request to close the chat room from the host terminal 111, the operating server 130 may inform the nth guest terminal 115, which is the remaining guest terminal, of the closing of the chat room in operation 335. In operation 337, the nth guest terminal 115 may transfer a response to confirm the closing of the chat room to the operating server 130. In operation 339, the operating server 130 may notify the host terminal 111 of the closing of the chat room.

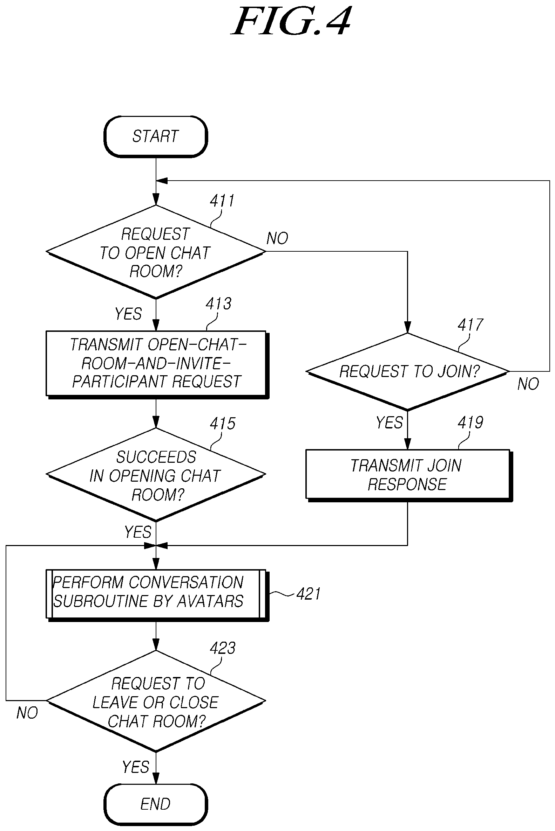

FIG. 4 is a view illustrating a control flow for performing an avatar-based conversation function in in an electronic device (e.g., the electronic device 110 of FIG. 1).

Referring to FIG. 4, the electronic device 110 (e.g., any of the electronic devices in 110 of Fig. 1) may determine whether an event requesting to open a chat room by the user occurs in operation 411. The event requesting to open a chat room may occur, e.g., as the application program to provide the avatar-based conversation function is executed, and information required to open a chat room is entered through a user interface (UI) provided by the executed application program.

If the user requests to open a chat room, the electronic device 110 may transmit a request to open a chat room and invite participants to the operating server (e.g., the server 130 of FIG. 1 or the operating server 130 of FIG. 3) in operation 413. The electronic device 110 may provide, e.g., information about a chat room to be opened (e.g., a chat room name or password) to the operating server 130 to request opening of a chat room. For example, to invite a guest to the chat room, the electronic device 110 may provide information about a guest to be invited (e.g., the participant's phone number or participant's ID) to the operating server 130. In the description below, 'participants' may refer to the host and one or more guests participating in the chat room. The electronic devices corresponding to the participants may include the electronic device 110 and one or more participating terminals. For example, when the electronic device 110 is a host terminal, the one or more participating terminals may be guest terminals. For another example, when the electronic device 110 is a guest terminal, one of the one or more participating terminals may be a host terminal.

In operation 415, the electronic device 110 may determine whether opening of a chat room has been successful using an avatar-based conversation function. Success in opening a chat room comes from completion of the response by all guest terminals (e.g., the first guest terminal 113 and/or nth guest terminal 115 of FIG. 3) invited after the chat room has been opened by the operating server 130. The electronic device 110 may receive information about the chat room and/or information about the participating guests when receiving a notification regarding success in opening the chat room from the operating server 130.

In operation 417, the electronic device 110 may determine whether a request to join the opened chat room is received to be able to use avatar-based conversation functions from the operating server 130. The join request may be provided from the operating server 130, e.g., as another electronic device is invited to the chat room requested to be opened.

The electronic device 110 may transmit a join response corresponding to the join request from the operating server 130 to the operating server 130 in operation 419. The electronic device 110 may transfer information about the avatar that it is to use, e.g., when transmitting the join response, to the operating server 130.

Upon successfully opening the chat room or responding to the join request, the electronic device 110 may provide the user with the avatar-based conversation function with the one or more participating terminals (e.g., the guest terminal (e.g., the first guest terminal 113 and/or nth guest terminal 115 of FIG. 3)) on the conversation screen provided in the virtual space in operation 421.

According to an embodiment, the electronic device 110 may configure the conversation screen based on information collected through the operating server 130 or information directly collected from the one or more participating terminals. The conversation screen configured by the electronic device 110 may reflect the user's request in real-time regardless of the opinions of other participants. The electronic device 110 may change the conversation screen considering an event, such as a change of speaker, manual manipulation of a participant, or motion of a participant. To change the conversation screen, the electronic device 110 may exchange event-related information with the one or more participating terminals (e.g., guest terminal (e.g., the first guest terminal 113 and/or nth guest terminal 115 of FIG. 3)). For example, the electronic device 110 may identify the speaker who is currently speaking based on the participants' voice data or images captured for the participants. The electronic device 110 may newly configure the conversation screen by changing the angle and/or field-of-view based on the identified speaker. The electronic device 110 may newly configure the conversation screen by changing the angle and/or field-of-view in response to the participant's (or user's) manual manipulation. The electronic device 110 may obtain the motion of participants (e.g., host or guest) from the image captured by itself or captured by one or more participating terminals and newly configure the conversation screen reflecting the obtained motion. The electronic device 110 may obtain the motions of the participants (e.g., host or guest) based on an internal sensing signal or an external sensing signal provided by one ore more participating terminals and newly configure the conversation screen reflecting the obtained motion.

According to an embodiment, the electronic device 110 may output a conversation screen where the avatar-based conversation function is to be used, based on information about the conversation screen provided from the operating server 130. The information about the conversation screen provided from the operating server 130 may be, e.g., information about the conversation screen provided for each participant based on the information collected from the electronic device 110 and/or the one more participating terminals by the operating server 130. The conversation screen may be changed for each participant by the operating server 130 considering an event, such as a speaker switch, manual manipulation by the participant, or the participant's motion. The electronic device 110 may collect information about an event internally occurring and transfer it to the operating server 130 to allow the operating server 130 to change the conversation screen. The electronic device 110 may transfer, e.g., the participant's voice data or an image captured for the participant, to the operating server 130. The participant's voice data or image captured for the participant, transferred, may be used for the operating server 130 to identify the speaker.

The conversation screen output by the electronic device 110 based on the information about the conversation screen provided by the operating server 130 may be a conversation screen with an angle and/or field-of-view changed with respect to the speaker. The conversation screen output by the electronic device 110 may be a conversation screen with an angle and/or field-of-view changed by manual manipulation by the participant (or user). The conversation screen output by the electronic device 110 may be a conversation screen reflecting the motions of the participants (e.g., host or guest) obtained from the image captured by the electronic device 110 and/or the one or more participating terminals. The conversation screen output by the electronic device 110 may be a conversation screen reflecting the motions of the participants (e.g., host or guest) obtained based on the sensing signal provided by the sensing signal of the electronic device 110 and/or the one or more participating terminals.

In operation 423, the electronic device 110 may determine whether a request-to-end-conversation event or a request-to-close-chat room event is generated by the user. The request-to-end-conversation event may occur, e.g., for the purpose of leaving the currently joined chat room when the electronic device 110 is the guest terminal. The request-to-close-chat room event may occur, e.g., for the purpose of closing the currently joined chat room when the electronic device 110 is the host terminal.

If the request-to-end-conversation event or request-to-close-chat room event occurs, the electronic device 110 may terminate the avatar-based conversation function. The termination of the avatar-based conversation function may be, e.g., terminating the application program providing the application-based function.

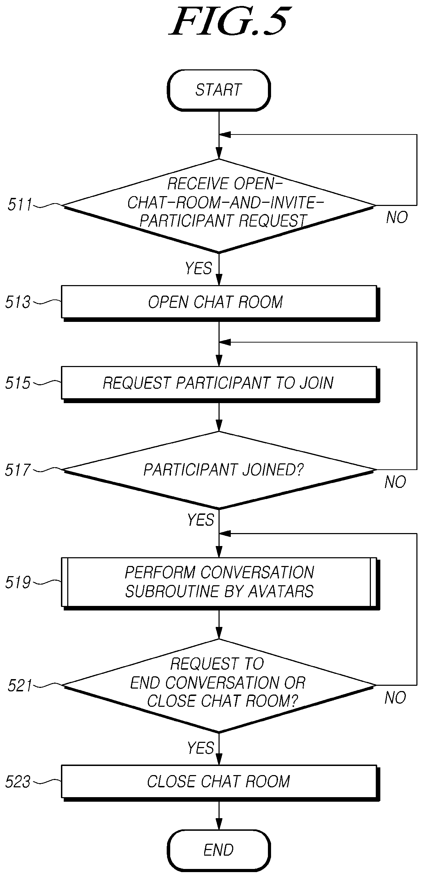

FIG. 5 is a view illustrating a control flow for performing an avatar-based conversation function in an operating server (e.g., the server 130 of FIG. 1).

Referring to FIG. 5, in operation 511, the operating server 130 may determine whether an open-chat room-and-invite-participant request is received from the host terminal (e.g., the first electronic device 111 of FIG. 1 or the host terminal 111 of FIG. 2). The operating server 130 may receive information (e.g., chat room name or password) about the chat room to be opened from the host terminal 111. The operating server 130 may receive information (e.g., the participant's phone number or ID) about the guest to be invited from the host terminal 111.

Upon receiving the open-chat room-and-invite-participant request, the operating server 130 may open a chat room in operation 513. The operating server 130 may open a chat room using the information (e.g., chat room name or password) about the chat room, received from the host terminal 111.

In operation 515, the operating server 130 may request the guest terminal (e.g., the first guest terminal 113 or nth guest terminal 115 of FIG. 2) requested to participate by the host terminal 111 to join the chat room. The operating server 130 may request the participant to join using the guest-related information (e.g., the participant's phone number or ID) received from the host terminal 111. The operating server 130 may include information (e.g., chat room name) about the chat room upon requesting the guest terminal 113 or 115 to join. The information about the chat room may be link information (e.g., URL information) for joining the chat room.

In operation 517, the operating server 130 may determine whether all the guest terminals 113 and 115 requested to join have completely joined the opened chat room. If only some guest terminals joined, the operating server 130 may wait until the remaining guest terminal joins. The operating server 130 may transmit a join request to the guest terminal, which has not joined until a predetermined time elapses, repeatedly a predetermined number of times. The operating server 130 may transfer information about the chat room and/or information about the participating guests to the host terminal 111, e.g., if a conversation becomes available.

If all the invited guest terminals 113 and 115 join, the operating server 130 may provide an avatar-based conversation function in operation 519. In an embodiment, the operating server 130 may configure a conversation screen for each participant, based on the information collected from the participating terminal 110 (e.g., the host terminal 111 or guest terminal 113 or 115). The operating server 130 may provide the conversation screen configured for each participant to the corresponding participating terminal 110. The operating server 130 may change the conversation screen for each participant, considering an event, such as a change of speaker, manual manipulation of a participant, or motion of a participant. To change the conversation screen, the operating server 130 may collect information about events occurring in the participating terminals 110. In an embodiment, the operating server 130 may identify the speaker who is currently speaking based on the participants' voice data or images captured for the participants. The operating server 130 may newly configure the conversation screen for each participant by changing the angle and/or field-of-view based on the identified speaker. In an embodiment, the operating server 130 may newly configure the conversation screen, to be provided to the participating terminals 110, by changing the angle and/or field-of-view in response to the participant's (or user's) manual manipulation. As an embodiment, the operating server 130 may obtain the motion of participants (e.g., host or guest) from the image captured by the participating terminals and newly configure the conversation screen, for each participant, reflecting the obtained motion. In an embodiment, the operating server 130 may obtain the motions of the participants (e.g., host or guest) based on the sensing signals provided by the participating terminals 110 and newly configure the conversation screen, for each participant, reflecting the obtained motion. The operating server 130 may provide information about the newly configured conversation screen to the participating terminals 110.

In operation 521, the operating server 130 may determine whether an end-conversation request or a close-chat room request from the participating terminal 110. The end-conversation request may be transferred, e.g., for the guest terminal 113 or 115 to leave the currently participating chat room. The close-chat room request may be transferred, e.g., for the host terminal 111 to close the currently participating chat room.

Upon receiving a leave request from the guest terminal 113 or 115 in operation 523, the operating server 130 may allow the guest terminal 113 or 115 to leave the chat room. Upon receiving the close-chat room request from the host terminal 111 in operation 523, the operating server 130 may close the chat room.

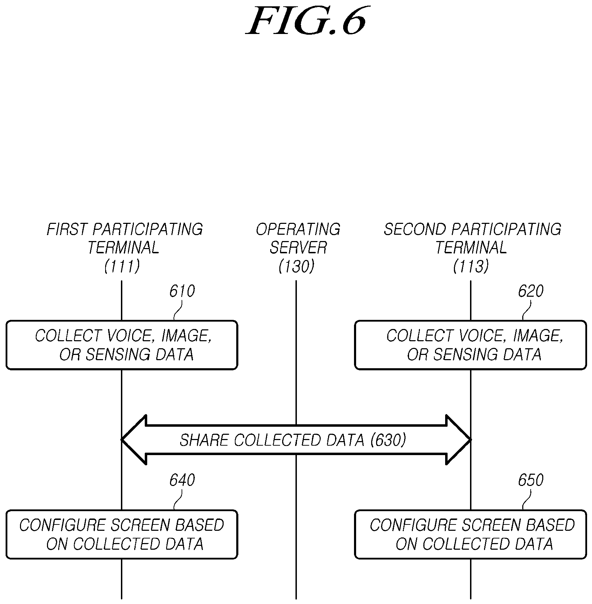

FIG. 6 is a view illustrating a signal flow for performing an avatar conversation subroutine in a system (e.g., the system 100 of FIG. 1). The signal flow shown in FIG. 6 regards an embodiment in which the participating terminal 111 or 113 configures its own conversation screen based on its collected data (e.g., voice, image, or sensing data).

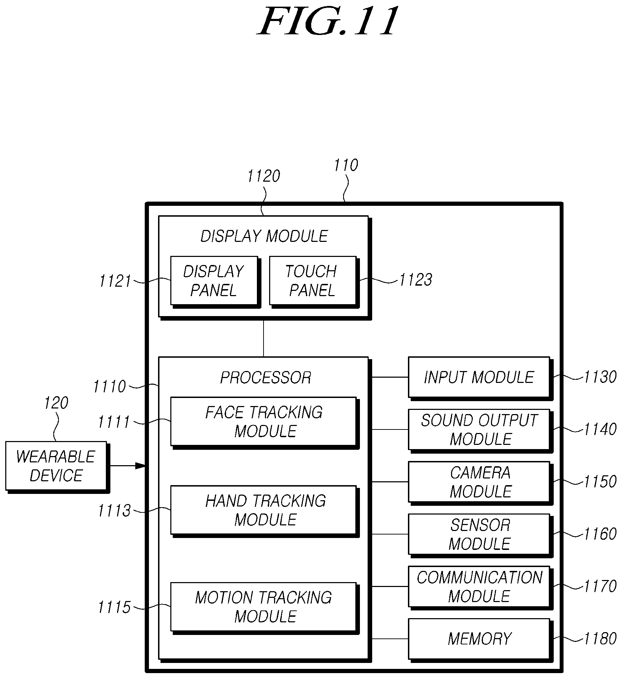

Referring to FIG. 6, in operation 610, the first participating terminal (e.g., the first electronic device 111 of FIG. 1), which is using the avatar-based conversation function, may collect the user's voice data, image data, or sensing data. The first participating terminal 111 may collect the electrical signal, converted into from the user's voice entered through, e.g., a microphone (e.g., the input module 1130 of FIG. 11), as the voice data. The first participating terminal 111 may collect the electrical signal corresponding to the user's image captured by, e.g., a camera (e.g., the camera module 1150 of FIG. 11), as the image data. The first participating terminal 111 may collect the electrical signal sensed by at least one sensor (e.g., the sensor module 1160 of FIG. 11), such as a gyroscope sensor, as the sensing data. The first participating terminal 111 may collect the electrical signal sensed by a wearable device (e.g., the wearable device 120 of FIG. 1 or 11) having a gyroscope sensor, as the sensing data. The collected voice data may be used, e.g., to determine the speaker. The image data may be used, e.g., to determine the speaker, the user's motion (e.g., facial expression, gaze, or body motion, such as a hand, arm, neck, or leg), or shift of screen angle. The collected sensing data may be used, e.g., to determine the user's motion (e.g., body motion, such as a hand, arm, neck, or leg) or a shift of screen angle.

In operation 620, the second participating terminal (e.g., the second electronic device 113 of FIG. 1), which is using the avatar-based conversation function together with the first participating terminal 111, may collect the user's voice data, image data, or sensing data. The second participating terminal 113 may collect the electrical signal, converted into from the user's voice entered through, e.g., a microphone (e.g., the input module 1130 of FIG. 11), as the voice data. The second participating terminal 113 may collect the electrical signal corresponding to the user's image captured by, e.g., a camera (e.g., the camera module 1150 of FIG. 113), as the image data. The second participating terminal 113 may collect the electrical signal sensed by at least one sensor (e.g., the sensor module 1160 of FIG. 11), such as a gyroscope sensor, as the sensing data. The first participating terminal 113 may collect the electrical signal sensed by a wearable device (e.g., the wearable device 120 of FIG. 2 or 11) having a gyroscope sensor, as the sensing data. The collected voice data may be used, e.g., to determine the speaker. The image data may be used, e.g., to determine the speaker, the user's motion (e.g., facial expression, gaze, or body motion, such as a hand, arm, neck, or leg), or shift of screen angle. The collected sensing data may be used, e.g., to determine the user's motion (e.g., body motion, such as a hand, arm, neck, or leg) or a shift of screen angle.

The first participating terminal 111 may share the collected data with the second participating terminal 113 in operation 630. The first participating terminal 111 may transfer at least one of, e.g., collected voice data, image data, or sensing data to the second participating terminal 113. The second participating terminal 113 may share the collected data with the first participating terminal 111 in operation 630. The second participating terminal 113 may transfer at least one of, e.g., collected voice data, image data, or sensing data to the first participating terminal 111.

In operation 640, the first participating terminal 111 may configure a conversation screen based on at least one of data collected by itself and/or collected data provided from the second participating terminal 113. The first participating terminal 111 may change the conversation screen considering an event, such as a change of speaker or motion of a participant that may be identified through collected data, for example. For example, the first participating terminal 111 may identify the speaker who is currently speaking based on the collected participants' voice data or images captured for the participants. The first participating terminal 111 may newly configure the conversation screen by changing the angle and/or field-of-view based on the identified speaker. The first participating terminal 111 may obtain the motion of participants (e.g., host or guest) from the collected image captured by itself or captured by second participating terminal 113 and newly configure the conversation screen reflecting the obtained motion. The first participating terminal 111 may obtain the motions of the participants (e.g., host or guest) based on the collected internal sensing signal or an external sensing signal provided by the second participating terminal 113 or wearable device 120 and newly configure the conversation screen reflecting the obtained motion.

In operation 650, the second participating terminal 113 may configure a conversation screen based on at least one of data collected by itself and/or collected data provided from the first participating terminal 111. The second participating terminal 113 may change the conversation screen considering an event, such as a change of speaker or motion of a participant that may be identified through collected data, for example. For example, the second participating terminal 113 may identify the speaker who is currently speaking based on the collected participants' voice data or images captured for the participants. The second participating terminal 113 may newly configure the conversation screen by changing the angle and/or field-of-view based on the identified speaker. The second participating terminal 113 may obtain the motion of participants (e.g., host or guest) from the collected image captured by itself or captured by first participating terminal 111 and newly configure the conversation screen reflecting the obtained motion. The second participating terminal 113 may obtain the motions of the participants (e.g., host or guest) based on the collected internal sensing signal or an external sensing signal provided by the first participating terminal 111 or wearable device 120 and newly configure the conversation screen reflecting the obtained motion.

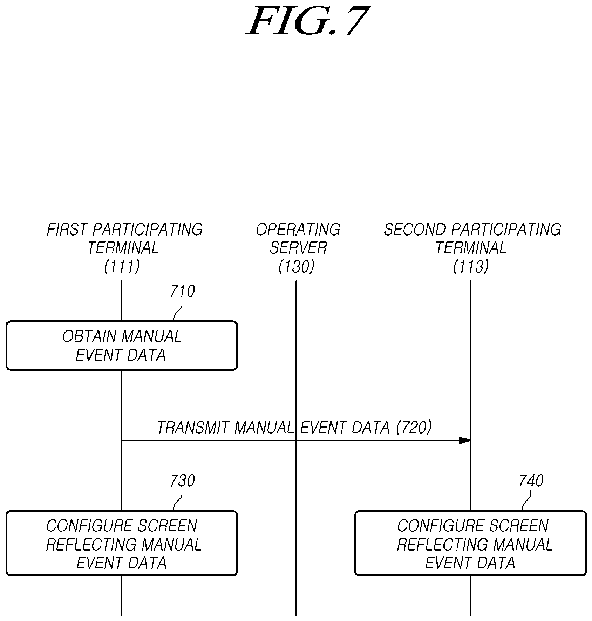

FIG. 7 is a view illustrating a signal flow for performing an avatar conversation subroutine in a system (e.g., the system 100 of FIG. 1). The signal flow shown in FIG. 7 regards an embodiment in which the first participating terminal 111 configures a conversation screen for itself or another participating terminal (e.g., the second participating terminal 113) based on data (e.g., manual event data) collected by the first participating terminal 111. While FIG. 7 assumes a situation in which manual event data is obtained by the first participating terminal 111, it is of course possible that the same procedure may be performed when manual event data is acquired by another participating terminal (e.g., the second participating terminal 113).

Referring to FIG. 7, in operation 710, the first participating terminal (e.g., the first electronic device 111 of FIG. 1), which is using the avatar-based conversation function, may collect manual event data by the user's manipulation. The first participating terminal 111 may collect information manually entered by the user via a touch panel (e.g., the touch panel 1123 of FIG. 11) as manual event data, for example. The manual event data may be used, e.g., to determine the speaker. The manual event data may be used, e.g., to determine a screen view (e.g., zoom-in or zoom-out). The manual event data may be used, e.g., to select a zoom-in target. The manual event data may be used, e.g., to determine the display type (e.g., landscape screen or portrait screen).

The first participating terminal 111 may transfer the collected manual event data to the second participating terminal 113 in operation 720.

In operation 730, the first participating terminal 111 may configure a conversation screen based on the manual event data collected by itself. The first participating terminal 111 may newly configure the conversation screen, e.g., by changing an angle and/or field-of-view based on the collected manual event data. The first participating terminal 111 may identify the speaker who is currently speaking, e.g., based on manual event data it has collected. The first participating terminal 111 may newly configure the conversation screen, e.g., by changing the angle, screen view (e.g., landscape screen or portrait screen), and/or field-of-view (e.g., zoom-in or zoom-out) based on the identified speaker or a designated target. The first participating terminal 111 may obtain the motion of participants (e.g., host or guest) based on the collected manual event data and newly configure the conversation screen reflecting the obtained motion. The first participating terminal 111 may obtain the motion of participants (e.g., host or guest) based on the collected manual event data and newly configure the conversation screen reflecting the obtained motion.

In operation 740, the second participating terminal 113 may configure a conversation screen based on the manual event data transferred by the first participating terminal 111. The first participating terminal 113 may newly configure the conversation screen, e.g., by changing an angle and/or field-of-view based on the manual event data transferred by the first participating terminal 111. The first participating terminal 113 may identify the speaker who is currently speaking, e.g., based on the manual event data transferred by the first participating terminal 111. The second participating terminal 113 may newly configure the conversation screen by changing the angle, screen view (e.g., landscape screen or portrait screen), and/or field-of-view (e.g., zoom-in or zoom-out) based on the identified speaker or a designated target. The first participating terminal 113 may obtain the motion of participants (e.g., host or guest) based on the manual event data transferred by the first participating terminal 111 and newly configure the conversation screen reflecting the obtained motion. The second participating terminal 113 may obtain the motion of participants (e.g., host or guest) based on the manual event data transferred by the first participating terminal 111 and newly configure the conversation screen reflecting the obtained motion.

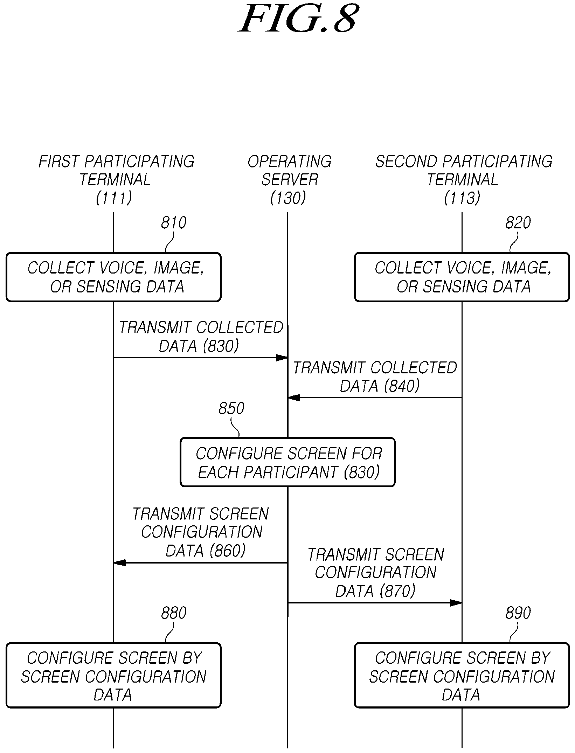

FIG. 8 is a view illustrating a signal flow for performing an avatar conversation subroutine in a system (e.g., the system 100 of FIG. 1). The signal flow shown in FIG. 8 regards an embodiment in which an operating server (e.g., the server 130 of FIG. 1) configures a conversation screen (e.g., the conversation screen of the first participating terminal 111 or the conversation screen of the second participating terminal 113) for each participant based on data (e.g., voice, image, or sensing data) collected by the participating terminals 111 or 113.

Referring to FIG. 8, in operation 810, the first participating terminal (e.g., the first electronic device 111 of FIG. 1), which is using the avatar-based conversation function, may collect the user's voice data, image data, or sensing data. The first participating terminal 111 may collect the electrical signal, converted into from the user's voice entered through, e.g., a microphone (e.g., the input module 1130 of FIG. 11), as the voice data. The first participating terminal 111 may collect the electrical signal corresponding to the user's image captured by, e.g., a camera (e.g., the camera module 1150 of FIG. 11), as the image data. The first participating terminal 111 may collect the electrical signal sensed by at least one sensor (e.g., the sensor module 1160 of FIG. 11), such as a gyroscope sensor, as the sensing data. The first participating terminal 111 may collect the electrical signal sensed by a wearable device (e.g., the wearable device 120 of FIG. 1 or 11) having a gyroscope sensor, as the sensing data.

The first participating terminal 111 may share the collected data with the operating server 130 in operation 830. The first participating terminal 111 may transfer at least one of, e.g., collected voice data, image data, or sensing data to the operating server 130.

In operation 820, the second participating terminal (e.g., the second electronic device 113 of FIG. 1), which is using the avatar-based conversation function together with the first participating terminal 111, may collect the user's voice data, image data, or sensing data. The second participating terminal 113 may collect the electrical signal, converted into from the user's voice entered through, e.g., a microphone (e.g., the input module 1130 of FIG. 11), as the voice data. The second participating terminal 113 may collect the electrical signal corresponding to the user's image captured by, e.g., a camera (e.g., the camera module 1150 of FIG. 113), as the image data. The second participating terminal 113 may collect the electrical signal sensed by at least one sensor (e.g., the sensor module 1160 of FIG. 11), such as a gyroscope sensor, as the sensing data. The first participating terminal 113 may collect the electrical signal sensed by a wearable device (e.g., the wearable device 120 of FIG. 2 or 11) having a gyroscope sensor, as the sensing data.

The second participating terminal 113 may share the collected data with the operating server 130 in operation 840. The second participating terminal 113 may transfer at least one of, e.g., collected voice data, image data, or sensing data to the operating server 130.

In operation 850, the operating server 130 may configure a conversation screen for each participant based on the collected data transferred from the first participating terminal 111 and/or the second participating terminal 113. The conversation screen for each participant may be, e.g., a first conversation screen for the first participating terminal 111 or a second conversation screen for the second participating terminal 113.

The operating server 130 may change the conversation screen for each participant considering an event, such as a change of speaker or motion of a participant that may be identified through collected data, for example. For example, the operating server 130 may identify the speaker who is currently speaking based on the participants' voice data or images captured for the participants, included in the collected data. The operating server 130 may newly configure the conversation screen for each participant by changing the angle and/or field-of-view based on the identified speaker. The operating server 130 may obtain the motion of participants (e.g., host or guest) from the image data included in the collected data and newly configure the conversation screen, for each participant, reflecting the obtained motion. The operating server 130 may obtain the motions of the participants (e.g., host or guest) based on the sensing signal included in the collected data and newly configure the conversation screen, for each participant, reflecting the obtained motion.

In operation 860, the operating server 130 may transfer information (screen configuration data) about the first conversation screen configured for the first participating terminal 111 to the first participating terminal 111. In operation 870, the operating server 130 may transfer information (screen configuration data) about the second conversation screen configured for the second participating terminal 113 to the second participating terminal 113.

In operation 880, the first participating terminal 111 may configure the first conversation screen by information (screen configuration data) about the first conversation screen transferred from the operating server 130. The first participating terminal 111 may configure the first conversation screen changed considering an event, such as a speaker switch or a participant's motion, identifiable through the information (screen configuration data) about the first conversation screen, and output the configured first conversation screen through the display.

In operation 890, the second participating terminal 113 may configure the second conversation screen by information (screen configuration data) about the second conversation screen transferred from the operating server 130. The second participating terminal 113 may configure the second conversation screen changed considering an event, such as a speaker switch or a participant's motion, identifiable through the information (screen configuration data) about the second conversation screen, and output the configured second conversation screen through the display.

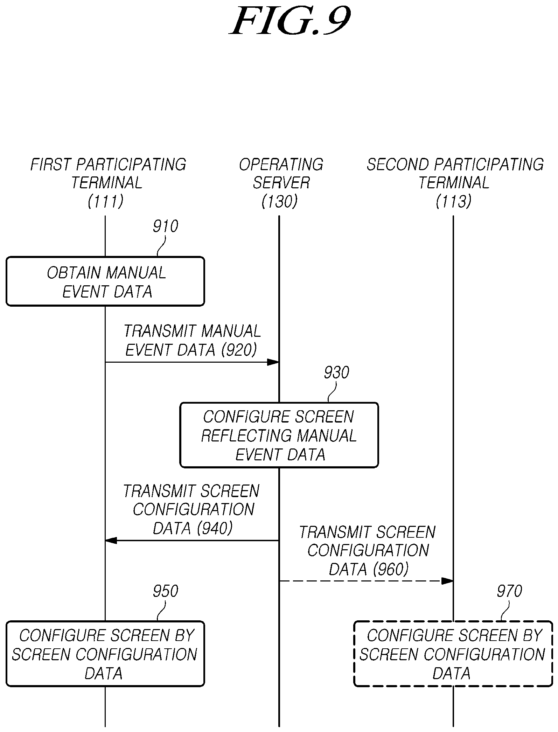

FIG. 9 is a view illustrating a signal flow for performing an avatar conversation subroutine in a system (e.g., the system 100 of FIG. 1). The signal flow shown in FIG. 9 regards an embodiment in which the first participating terminal 111 configures a conversation screen for itself or another participating terminal (e.g., the second participating terminal 113) based on data (e.g., manual event data) collected by the first participating terminal 111. While FIG. 9 assumes a situation in which manual event data is obtained by the first participating terminal 111, it is of course possible that the same procedure may be performed when manual event data is acquired by another participating terminal (e.g., the second participating terminal 113).

Referring to FIG. 9, in operation 910, the first participating terminal (e.g., the first electronic device 111 of FIG. 1), which is using the avatar-based conversation function, may collect manual event data by the user's manipulation. The first participating terminal 111 may collect information manually entered by the user via a touch panel (e.g., the touch panel 1123 of FIG. 11) as manual event data, for example. The manual event data may be used, e.g., to determine the speaker. The manual event data may be used, e.g., to determine a screen view (e.g., zoom-in or zoom-out). The manual event data may be used, e.g., to select a zoom-in target. The manual event data may be used, e.g., to determine the display type (e.g., landscape screen or portrait screen).

The first participating terminal 111 may transfer the collected manual event data to the operating server 130 in operation 920.

In operation 930, the operating server 130 may configure a conversation screen based on the manual event data transferred from the first participating terminal 111. The operating server 130 may configure the first conversation screen of the first participating terminal 111 based on the manual event data transferred from the first participating terminal 111. The operating server 130 may configure the second conversation screen of the second participating terminal 113 based on the manual event data transferred from the first participating terminal 111. The operating server 130 may configure the first conversation screen of the first participating terminal 111 and the second conversation screen of the second participating terminal 113 based on the manual event data transferred from the first participating terminal 111.

The operating server 130 may newly configure the conversation screen, e.g., by changing an angle and/or field-of-view based on the transferred manual event data. The operating server 130 may identify the speaker who is currently speaking, e.g., based on the transferred manual event data. The operating server 130 may newly configure the conversation screen, e.g., by changing the angle, screen view (e.g., landscape screen or portrait screen), and/or field-of-view (e.g., zoom-in or zoom-out) based on the identified speaker or a designated target. The operating server 130 may obtain the motions of the participants (e.g., host or guest) based on the transferred manual event data and newly configure the conversation screen reflecting the obtained motion. The operating server 130 may obtain the motions of the participants (e.g., host or guest) based on the transferred manual event data and newly configure the conversation screen reflecting the obtained motion.

In operation 940, the operating server 130 may transfer information (screen configuration data) about the first conversation screen configured for the first participating terminal 111 to the first participating terminal 111. In operation 960, the operating server 130 may transfer information (screen configuration data) about the second conversation screen configured for the second participating terminal 113 to the second participating terminal 113.

In operation 950, the first participating terminal 111 may configure the first conversation screen by information (screen configuration data) about the first conversation screen transferred from the operating server 130. The first participating terminal 111 may configure the first conversation screen changed considering an event, such as a speaker switch or a participant's motion, identifiable through the information (screen configuration data) about the first conversation screen, and output the configured first conversation screen through the display.

In operation 970, the second participating terminal 113 may configure the second conversation screen by information (screen configuration data) about the second conversation screen transferred from the operating server 130. The second participating terminal 113 may configure the second conversation screen changed considering an event, such as a speaker switch or a participant's motion, identifiable through the information (screen configuration data) about the second conversation screen, and output the configured second conversation screen through the display.

Operations 960 and 970 described above may be optionally performed or omitted as needed.

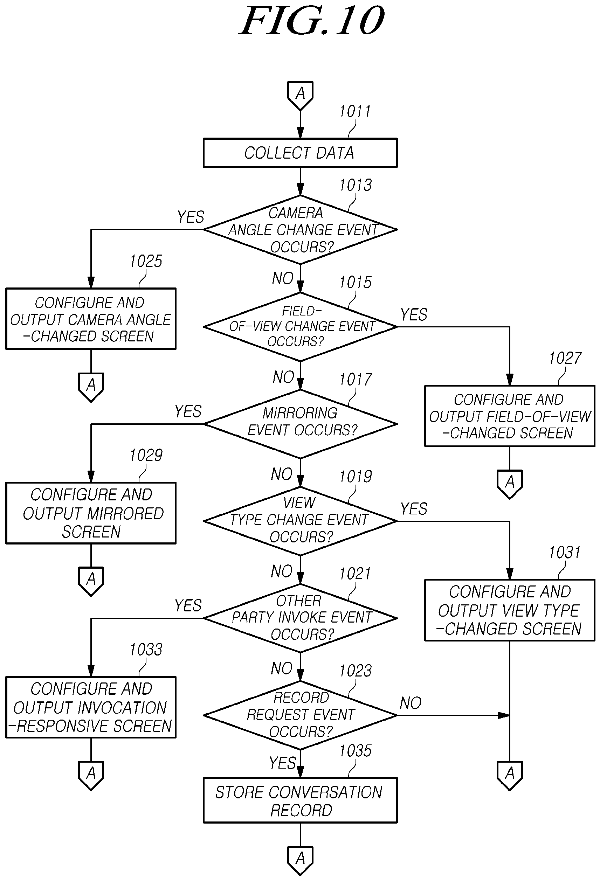

FIG. 10 is a view illustrating a control flow for configuring a conversation screen of an avatar conversation function in an electronic device (e.g., the first or second participating terminal 111 or 113 of FIGS. 6 and 7 or the operating server 130 of FIGS. 8 and 9) according to an embodiment. In an embodiment, the first participating terminal 111 may perform operations according to the control flowchart of FIG. 10 in operation 640 of FIG. 6 or operation 730 of FIG. 7. In an embodiment, the second participating terminal 113 may perform operations according to the control flowchart of FIG. 10 in operation 650 of FIG. 6 or operation 740 of FIG. 7. In an embodiment, the operating server 130 may perform operations according to the control flowchart of FIG. 10 in operation 850 of FIG. 8 or operation 930 of FIG. 9.

Referring to FIG. 10, in operation 1011, the electronic device 110 or 130 may collect data for configuring a conversation screen. The electronic device 110 or 130 may collect, e.g., user voice data, image data, or sensing data.

The electronic device 110 may use internally contained components (e.g., microphone, camera, or sensor) or an external device (e.g., the wearable device 120) to collect data to be referenced to configure the conversation screen. The electronic device 110 may collect the electrical signal, converted into from the user's voice entered through, e.g., a microphone (e.g., the input module 1130 of FIG. 11), as the voice data. The electronic device 110 may collect the electrical signal corresponding to the user's image captured by, e.g., a camera (e.g., the camera module 1150 of FIG. 113), as the image data. The electronic device 110 may collect the electrical signal sensed by at least one sensor (e.g., the sensor module 1160 of FIG. 11), such as a gyroscope sensor, as the sensing data. The electronic device 110 may collect the electrical signal sensed by a wearable device (e.g., the wearable device 120 of FIG. 1 or 11) having a gyroscope sensor, as the sensing data. The electronic device 130 may receive the data collected by the participating terminals (e.g., the first and second participating terminals 111 and 113 of FIG. 8 or 9). The first and second participating terminals 111 and 113 may be, e.g., electronic devices participating in a conversation using avatars.

In operation 1013, the electronic device 110 or 130 may determine whether a camera angle change event occurs. The camera angle change event may correspond to when a situation where the angle applied to the current conversation screen needs to be changed into an angle in a different direction or different viewpoint occurs. The camera angle change event may occur, e.g., when the speaker is changed or a target of interest is changed by the user's manual manipulation.

As an example, the electronic device 110 or 130 may identify the speaker that is currently speaking based on the participant's voice data included in the collected data. The electronic device 110 or 130 may obtain voice characteristics of the participants based on the participants' voice data included in, e.g., the collected data. The electronic device 110 or 130 may predict the participant having obtained voice characteristics using information regarding preset reference voice characteristics for each participant. The electronic device 110 or 130 may determine the avatar of the predicted participant among the avatars participating in the conversation as the speaker avatar. When the avatar-based conversation function is activated and a conversation is performed by the participants, the electronic device 110 or 130 may collect voice data of the participants. The electronic device 110 or 130 may obtain information regarding the reference voice characteristics for each participant using the collected voice data. The electronic device 110 or 130 may set or register information about a reference voice characteristic obtained for each participant as a reference voice characteristic corresponding to the corresponding participant.

As an example, the electronic device 110 or 130 may identify the speaker that is currently speaking based on the image captured for the participant included in the collected data. For example, the electronic device 110 or 130 may obtain feature information about the mouth shape in the face images of the participants. The electronic device 110 or 130 may predict the speaker by determining whether the obtained mouth shape feature is a feature that may appear in the speaker. The electronic device 110 or 130 may determine the avatar of the participant predicted as the predicted speaker among the avatars participating in the conversation as the speaker avatar. The electronic device 110 or 130 may collect characteristics of the mouth shape that the speaker may have through repetitive learning to predict the speaker. The electronic device 110 or 103 may set or store the collected mouth shape feature as reference information for predicting the speaker.

For example, the electronic device 110 or 130 may collect manual event data according to the user's manual manipulation and determine that an angle change event has occurred based on the collected manual event data.

When a camera angle change event occurs, the electronic device 110 or 130 may determine an angle to face the speaker avatar or a specific target designated by the manual event data and configure a conversation screen based on the determined angle in operation 1025. The electronic device 110 or 130 may output the configured conversation screen or transfer it to an electronic device to which it is to be applied. When configuring a conversation screen based on the determined angle, the electronic device 110 or 130 may reflect the gaze or motion of the listener avatar with respect to the speaker avatar. For example, the electronic device 110 or 130 may configure a conversation screen so that the listener avatar's gaze is directed toward the speaker avatar.

In operation 1015, the electronic device 110 or 130 may determine whether a camera field-of-view change event occurs. The camera field-of-view change event may correspond to when a situation where it is needed to change the field-of-view applied to the current conversation screen into a wider or narrower field-of-view occurs. The camera field-of-view change event may occur, e.g., when a zoom-out requirement or a zoom-in requirement is met or by the user's manual manipulation (e.g., the user's swiping motion). The zoom-out requirement may include, e.g., when the participant first joins to start a conversation, when such a situation where all participants need to be identified occurs, when the participants simultaneously talk, when none of the participants talk, or when such a situation where participants talk at short intervals. The zoom-in requirement may include, e.g., a situation in which a specific participant speaks longer in an automatic mode or the user selects a specific participant.

As an example, the electronic device 110 or 130 may identify the speaker that is currently speaking based on the participant's voice data or image data captured for the participant, included in the collected data. A method for determining the speaker by the electronic device 110 or 130 based on voice data or image data may be applied in the same manner as described above. When the electronic device 110 or 130 determines the speaker, the electronic device 110 or 130 may comprehensively consider the time when the chat room is joined by the speaker avatar corresponding to the speaker, the duration when the speaker is maintained, or the presence or absence of another speaker to determine whether it is needed to switch the field-of-view to which zoom-in or zoom-out is to be applied.

For example, the electronic device 110 or 130 may collect manual event data according to the user's manual manipulation (e.g., swiping) and determine that a field-of-view change event has occurred based on the collected manual event data.

When a camera field-of-view change event occurs, the electronic device 110 or 130 may change the field-of-view to face the speaker avatar or a specific target designated by the manual event data and configure a conversation screen based on the changed field-of-view in operation 1027. The electronic device 110 or 130 may output the configured conversation screen or transfer it to an electronic device to which it is to be applied. When configuring a conversation screen based on the changed field-of-view, the electronic device 110 or 130 may reflect the gaze or motion of the listener avatar with respect to the speaker avatar. For example, the electronic device 110 or 130 may configure a conversation screen so that the listener avatar's gaze is directed toward the speaker avatar.

In operation 1017, the electronic device 110 or 130 may determine whether a mirroring event occurs. The mirroring event may correspond to an event requesting that a behavior, such as the user's actual facial expression or motion on a conversation screen, be reflected on the user's avatar.

For example, the electronic device 110 or 130 may determine the occurrence of a mirroring event based on a change in facial expression or motion of a specific body part (e.g., neck or hand) from the user's image captured by the front camera. The electronic device 110 or 130 may determine the occurrence of a mirroring event based on a change in facial expression or motion of the participant based on data provided from other electronic devices.

When a mirroring event occurs, the electronic device 110 or 130 may configure a mirrored conversation screen in operation 1029. For example, the electronic device 110 or 130 may identify a change in the user's facial expression and reflect the identified facial expression change to the avatar's face in the same or similar manner. An example method for reflecting it in a similar manner may be selecting a similar image from among preset avatar images and applying the selected image to the conversation screen. For example, the electronic device 110 or 130 may identify a change in the user's motion and reflect the identified motion change to the avatar in the same or similar manner. An example method for reflecting it in a similar manner may be selecting a similar image from among preset avatar images and applying the selected image to the conversation screen. The electronic device 110 or 130 may enhance the accuracy of determination of motion and use sensing information provided from the wearable device 120.

The electronic devices 110 or 130 may, in operation 1019, determine that a view type switch event has occurred. The view type switch event may include, e.g., a situation in which the number of participants in the chat room is changed. When the view type switching event occurs, the electronic devices 110 or 130 may determine an appropriate view type for the situation and configure a conversation screen to which the determined view type is applied.

In an example, the electronic device 110 or 130 may configure and output a conversation screen with the other party's avatar positioned near the center of the display where the screen is in the portrait type when two people have a conversation. For immersion purposes, the electronic device 110 or 130 may not display the user's avatar on the screen but may rather make it transparent and keep the field-of-view constant.

As an example, when three people have a conversation, the electronic device 110 or 130 may output a conversation screen in which the other parties' avatars are disposed on two opposite sides of the center of the display where the screen is in the portrait type. In this case, the electronic device 110 or 130 may make its avatar transparent without displaying it on the screen and move the field-of-view of its avatar away from those of the other parties' avatars to have a wider field-of-view than that when two people have a conversation.

As an example, the electronic device 110 or 130 may output a conversation screen with the other parties' avatars positioned on two opposite sides of and near the center of the display where the screen is in the portrait type when four people have a conversation. In this case, as an example, the electronic device 110 or 130 may make its avatar transparent without displaying it on the screen and move the field-of-view of its avatar away from those of the other parties' avatars to have a wider field-of-view than that when three people have a conversation.

As an example, the electronic device 110 or 130 may output a conversation screen with the other parties' avatars positioned, substrate at equal intervals, on two opposite sides of and near the center of the display where the screen is in the portrait type when five people have a conversation. In this case, as an example, the electronic device 110 or 130 may make its avatar transparent without displaying it on the screen and move the field-of-view of its avatar away from those of the other parties' avatars to have a wider field-of-view than that when four people have a conversation.

As an example, the electronic device 110 or 130 may output a conversation screen with the other parties' avatars positioned, substrate at equal intervals, on the display where the screen is in the portrait type when six people have a conversation. In this case, as an example, the electronic device 110 or 130 may make its avatar transparent without displaying it on the screen and move the field-of-view of its avatar away from those of the other parties' avatars to have a wider field-of-view than that when four people have a conversation.

In operation 1021, the electronic device 110 or 130 may determine whether an other party's avatar invoke event occurs.

For example, when the user touches the other party's avatar included in the conversation screen on the display, the electronic device 110 or 130 may determine that an other party invoke event occurs. The electronic device 110 or 130 may notify the other party's electronic device 110 that it has been requested to invoke the avatar based on the position of the touch and the sensing information according to the touch. The other party's electronic device 110 may output vibration or sound to indicate the invocation.

As an example, the electronic device 110 or 130 may analyze the information (e.g., image captured for the other party) provided from the other party's electronic device to determine whether the other party has reacted to the invocation. Upon determining that the other party has reacted to the invocation, the electronic device 110 or 130 may configure a conversation screen in which the image has been changed so that the other party's avatar 2170 looks at the user.

In operation 1023, the electronic device 110 or 130 may determine whether a record request event occurs while an avatar-based conversation is being performed or after the avatar-based conversation has been terminated. If a record request event occurs, the electronic device 110 or 130 may extract images corresponding to the conversation based on data collected during conversation and generate a conversation record image using the extracted images in operation 1035. The electronic device 110 or 130 may store, or transfer to an external electronic device, the generated conversation record image.

FIG. 11 is a block diagram illustrating a configuration of an electronic device (e.g., the electronic device 110 of FIG. 1) according to an embodiment.

Referring to FIG. 11, in an embodiment, an electronic device 110 may include a display module 1120 (e.g., the display module 2560 of FIG. 23), a processor 1110 (e.g., the processor 2520 of FIG. 23), an input module 1130 (e.g., the input module 2550 of FIG. 23), a sound output module 1140 (e.g., the sound output module 2555 of FIG. 23), a camera module 1150 (e.g., the camera module 2580 of FIG. 23), a sensor module 1160 (e.g., the sensor module 2576 of FIG. 23), a communication module 1170 (e.g., the communication module 2590 of FIG. 23), or a memory 1180 (e.g., the memory 2530 of FIG. 23).

The display module 1120 may include a display panel 1121 or a touch panel 1123. The display panel 1121 may visually provide information to the outside (e.g., a user) of the electronic device 110. The display 1120 may include, for example, a display, a hologram device, or a projector and control circuitry to control a corresponding one of the display, hologram device, and projector. The touch panel 1123 may include a touch sensor configured to detect the user's touch, or a pressure sensor configured to measure the intensity of a force generated by the touch. The operation of the display module 1120 may be controlled by electrical connection with the processor 1110. The operation of the display panel 1121 or touch panel 1123 included in the display module 1120 may be independently controlled by electrical connection with the processor 1110. In an embodiment, the display panel 1121 may be controlled by the processor 1110 to visually provide display information to be displayed to the outside (e.g., the user).

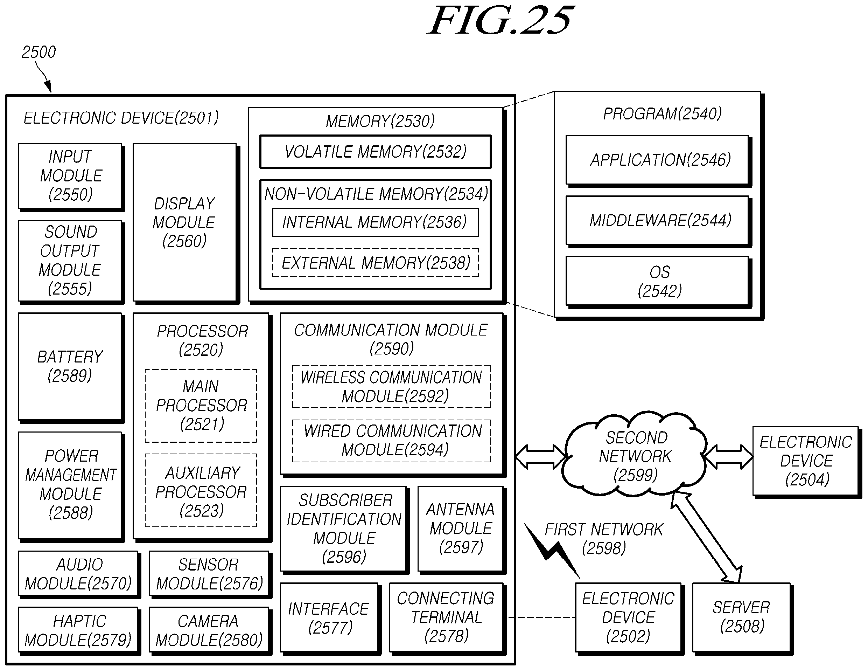

The processor 1110 may execute software (e.g., the program 2540 of FIG. 23) to control at least one other component (e.g., hardware or software component), such as an electrically connected display module 1120, input module 1130, sound output module 1140, camera module 1150, sensor module 1160, communication module 1170, or memory 1180, and may perform various data processing or computations. As at least part of the data processing or computation, the processor 1110 may store instructions or data received from other components (e.g., the display module 1120, communication module 1170, or input/output portion 127) in the storage unit 129 (e.g., volatile memory 2530 of FIG. 25), or process the instructions or data stored in the storage unit 129, and store the processed resulting data in the storage unit 129.

The input module 1130 may receive a command or data to be used by other component (e.g., the processor 1110) of the electronic device 110, from the outside (e.g., a user) of the electronic device 110. The input module 1130 may include, for example, a microphone, a mouse, a keyboard, keys (e.g., buttons), or a digital pen (e.g., a stylus pen).

The sound output module 1140 may output sound signals to the outside of the electronic device 110. The sound output module 1140 may include, for example, a speaker or a receiver. The speaker may be used for general purposes, such as playing multimedia or playing record. The receiver may be used for receiving incoming calls. The receiver may be implemented as separate from, or as part of the speaker.

The camera module 1150 may capture a still image or moving images. The camera module 1150 may include one or more lenses, image sensors, image signal processors, or flashes.

The sensor module 1160 may detect an operational state (e.g., power or temperature) of the electronic device 110 or an environmental state (e.g., a state of a user) external to the electronic device 101, and then generate an electrical signal or data value corresponding to the detected state. The sensor module 1160 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The communication module 1170 may establish a direct (e.g., wired) communication channel or a wireless communication channel with the wearable device 120 or support communication through the established communication channel. The communication module 1170 may include one or more communication processors that are operable independently from the processor 1110 and supports a direct (e.g., wired) communication or a wireless communication. The communication module 1170 may include a wireless communication module (e.g., the wireless communication module 2592 of FIG. 23) (e.g., a cellular communication module, a short-range wireless communication module, or a global navigation satellite system (GNSS) communication module) or a wired communication module (e.g., the wired communication module 2594 of FIG. 23) (e.g., a local area network (LAN) communication module or a power line communication (PLC) module). A corresponding one of these communication modules may communicate with the wearable device 120, which is an external electronic device, via a network 140 (e.g., a short-range communication network, such as Bluetooth^{™}, wireless-fidelity (Wi-Fi) direct, or infrared data association (IrDA)) or a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The memory 1180 may store various data used by at least one component (e.g., the display module 1120, the processor 1110, the communication module 1170, or the input/output unit 127) of the electronic device 110. The various data may include, for example, software (e.g., the program 2540) and input data or output data for a command related thereto. The storage unit 129 may include, e.g., a volatile memory (e.g., the volatile memory 2532 of FIG. 25) or non-volatile memory (e.g., the non-volatile memory 2534 of FIG. 25).

The processor 1110 may include, e.g., a face tracking module 1111, a hand tracking module 1113, or a motion tracking module 1115. The face tracking module 1111 may extract data of a part corresponding to a face from the user image captured by the camera module 1150 and may track a change in facial expression based on the extracted data. The hand tracking module 1113 may extract data of a part corresponding to the hand from the user image captured by the camera module 1150 and track the motion of the hand based on the extracted data. The hand tracking module 1113 may track a hand motion based on sensing information provided from the sensor module 1160 or sensing information provided from the wearable device 120. The motion tracking module 1115 may track the user's motion from the user image captured by the camera module 1150. The motion tracking module 1115 may track the user's motion based on sensing information provided from the sensor module 1160 or sensing information provided from the wearable device 120.

According to an embodiment, the processor 1110 may be configured to control the communication module 1170 to receive a request to provide display information after connecting the wearable device 120. The processor 1110 may control the communication module 1170 to transmit part (e.g., closed display information 435 of FIG. 4A) of the display information to the wearable device 120. The processor 1110 may be configured to control the display module 1120 to display part (e.g., open display information) of the display information. The processor 1110 may render display information before displaying it on the display module 1120. The display information may be, e.g., display information (full display information (e.g., the full display information 431 of FIG. 4A)) or partial display information (open display information) to be displayed on the electronic device 110.

According to an embodiment, the processor 1110 may be configured to control the communication module 1170 to receive a request to provide display information after connecting the wearable device 120. In response to the request, the processor 1110 may transmit display information to the wearable device 120 through the communication module 1170, and may separate partial display information (e.g., open display information) that it is to display, from the display information. The processor 1110 may be configured to display the separated partial display information by controlling the display module 1120. The processor 1110 may render the separated partial display information before displaying it on the display module 1120.

According to an embodiment, the processor 1110 may receive a layering change request from the wearable device 120 through the communication module 1170. As an embodiment, the processor 1110 may receive the layering change request from the wearable device 120. In response to the request, the processor 1110 may transmit display information (e.g., full display information) to the wearable device 120 through the communication module 1170. As an embodiment, the processor 1110 may receive adjusted layering-related information, along with the layering change request, from the wearable device 120. The processor 1110 may obtain partial display information (e.g., closed display information) from the display information using the layering-related information, and transmit it to the wearable device 120 through the communication module 1170. The processor 1110 may be configured to obtain partial display information (e.g., open display information) from the display information using the layering-related information and control the display module 1120 to display it. The processor 1110 may render display information to be displayed, before displaying it on the display module 1120.

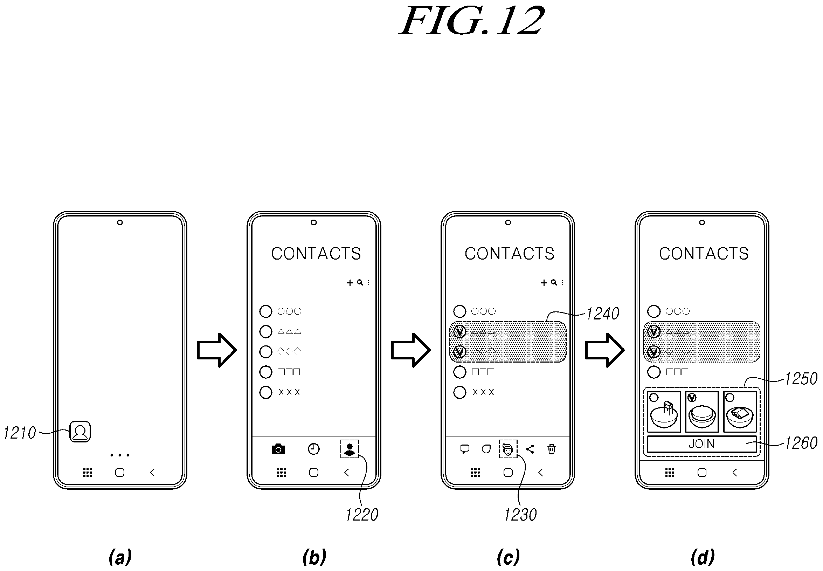

FIG. 12 is a view illustrating an example user interface UI for each procedure opening an avatar-based chat room in an electronic device (e.g., the electronic device 110 of FIG. 1) according to an embodiment.

Referring to FIG. 12, the display of the electronic device 110 may include an icon 1210 of a selectable application program to use an avatar-based conversation function (see (a)). The icon 1210 may be created on the screen of the display by installing an application program for using the avatar-based conversation function in the electronic device 110.

When the icon 1210 displayed on the screen of the display is selected, the electronic device 110 may output the user interface for selecting a guest to participate in the avatar-based conversation through the display (see (b)). The electronic device 110 may output a screen including, e.g., a list of targets that may be invoked for conversation, and an icon 1220 for requesting to initiate the conversation, through the display.

When the icon 1220 to initiate the conversation is selected, the electronic device 110 may output a screen including a selection status indication 1240 of guests to be called, selected by the user from the target list displayed on the display, and an icon 1230 for calling a guest, through the display (see (c)).

When the icon 1230 for calling a guest is selected, the electronic device 110 may display a user interface 1250 for selecting a chat room background and an icon 1260 for requesting to join the chat room through the display (see (d)). When the icon 1260 to request to join the chat room is selected by the user, the electronic device 110 may join the chat room where the avatar-based conversation function may be used.

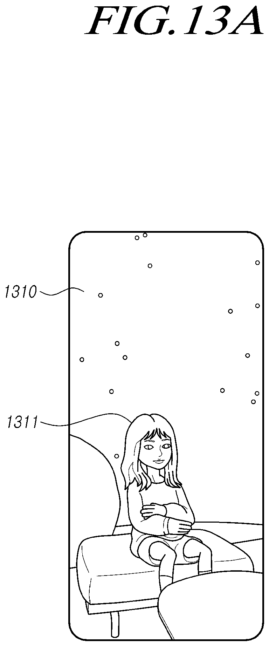

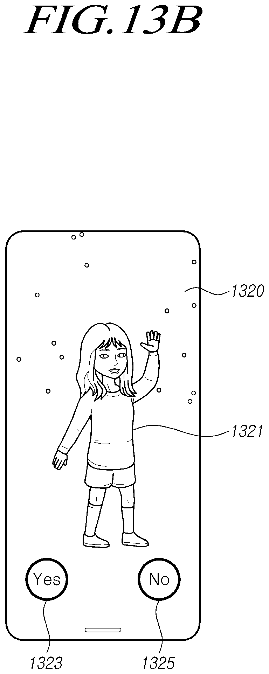

FIG. 13 illustrates an example user interface provided before entering a chat room for an avatar-based conversation function in an electronic device (e.g., the electronic device 110 of FIG. 1) according to an embodiment.

Referring to FIG. 13, the electronic device 110 which corresponds to the host terminal to open a chat room and call a guest may display an avatar 1311 shown to wait to join on the display 1310 (see (a)).

Upon receiving a conversation join request, the electronic device 110 which corresponds to the guest terminal invited to the avatar-based conversation by the host terminal may display, on the display 1320, an avatar 1320 requesting to join, an icon 1323 for agreeing to join the conversation, and an icon 1325 for disagreeing and rejecting to join the conversation (see (b)).

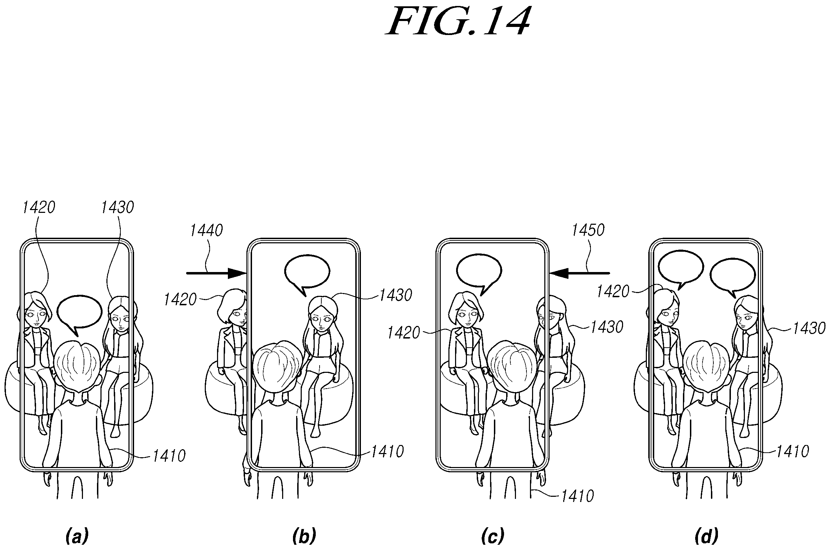

FIG. 14 illustrates an example angle change corresponding to a speaker switch in an electronic device 110 (e.g., the electronic device 110 of FIG. 1) according to an embodiment.

Referring to FIG. 14, when the user of the electronic device 110 is the speaker, the electronic device 110 may display a first conversation screen in which the first avatar 1410, which is its own avatar (i.e., the speaker's avatar) looks at the second and third avatars 1420 and 1430 which are the avatars of the other parties to the conversation (see (a)).

When the speaker is switched to the third avatar 1430 positioned on the right side of the direction in which the first avatar 1410 looks in the first conversation screen, the electronic device 110 may make the gaze of the first avatar 1410 face the third avatar 1430 and shift (1440) the angle at which the screen is to be configured in the right direction which is the direction to the third avatar 1430 and configure a second conversation screen and output it through the display (see (b)). On the second conversation screen, the angle may be adjusted so that the third avatar 1430 which is of the speaker is positioned near the center of the screen.

When the speaker is switched to the second avatar 1420 positioned on the left side of the direction in which the first avatar 1410 looks in the second conversation screen, the electronic device 110 may make the gazes of the first avatar 1410 and third avatar 1430 face the second avatar 1420 and shift (1450) the angle at which the screen is to be configured in the left direction which is the direction to the second avatar 1420 and configure a third conversation screen and output it through the display (see (c)). On the third conversation screen, the angle may be adjusted so that the second avatar 1420 which is of the speaker is positioned near the center of the screen.

When the second avatar 1420 and the third avatar 1430 positioned on the left and right sides of the direction in which the first avatar 1410 looks on the third conversation screen are both speakers, the electronic device 110 may make the gaze of the first avatar 1410 face forward and shift the angle at which the screen is to be configured to face forward of the first avatar 1410 and configure a fourth conversation screen and output it through the display (see (d)). On the fourth conversation screen, the angle may be adjusted such that the second avatar 1420 and the third avatar 1430, which are speakers, are substantially symmetrical with respect to about the center on the two opposite sides of the screen.

As illustrated, as the listener's viewpoint and the angle of the avatar-based conversation screen are adjusted with respect to the speaker, it is possible to provide the user with a more realistic conversation experience in the virtual space. For example, it is possible to provide a screen in which the face of the avatar representing the user has been turned toward the speaker avatar simply by allowing the user to hold the electronic device 110 without the need for the user's manipulation.

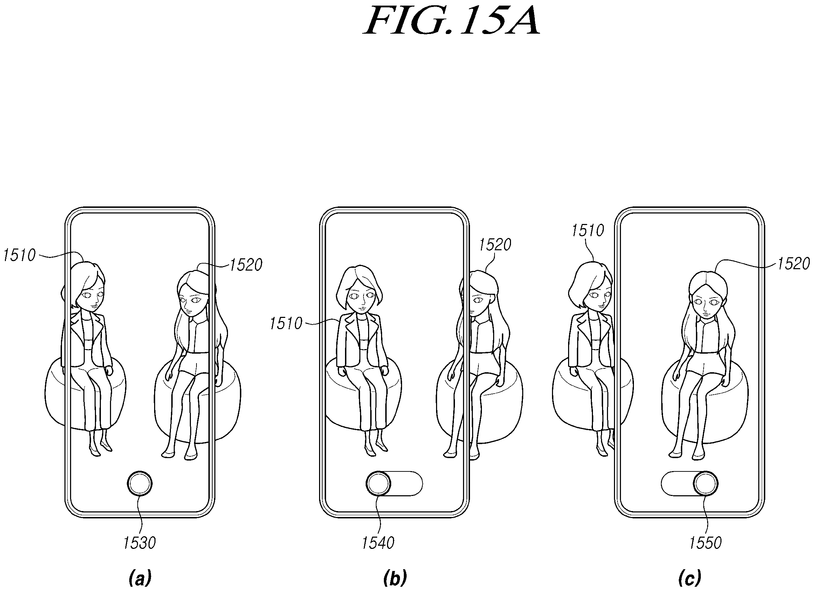

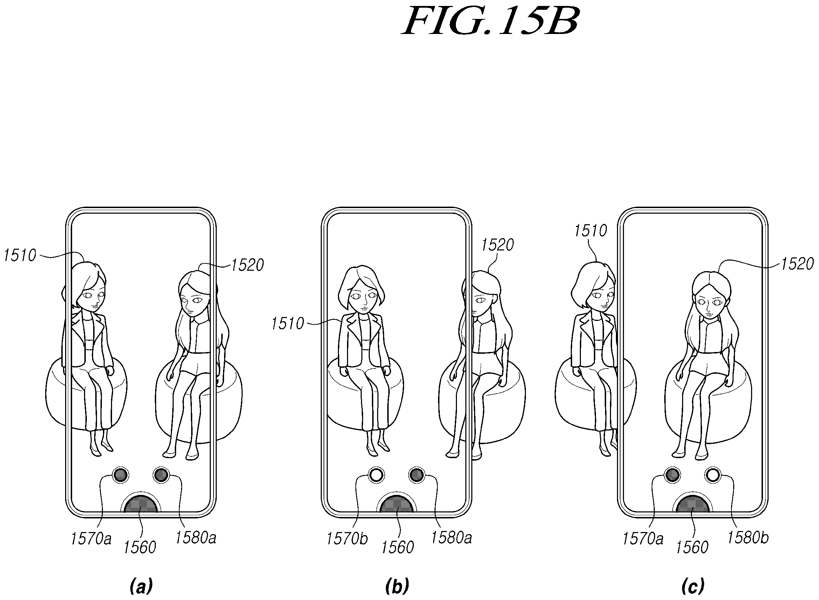

FIGS. 15A and 15B illustrates an example angle change corresponding to a manual manipulation in an electronic device 110 (e.g., the electronic device 110 of FIG. 1) according to an embodiment.

Referring to FIG. 15A, the electronic device 110 may display an icon 1530 for manually manipulating an angle change on a conversation screen displayed on the display (see (a)). Before the icon 1530 is manipulated by the user, the electronic device 110 may output, through the display, a conversation screen configured so that the first avatar 1510 and the second avatar 1520, which are the avatars of the other parties to the conversation face each other on two opposite sides.

When the icon 1530 is swiped (1540) to the left by the user, the electronic device 110 may shift the screen angle to the left so that the first avatar 1510 is moved to the right and positioned near the center, and change the conversation screen so that the second avatar 1520 is also moved to the right and display it through the display (see (b)).

When the icon 1530 is swiped (1550) to the right by the user, the electronic device 110 may shift the screen angle to the right so that the second avatar 1520 is moved to the left and positioned near the center, and change the conversation screen so that the first avatar 1510 is also moved to the left and display it through the display (see (c)).

Referring to FIG. 15B, the electronic device 110 may display a conversation screen including icons 1560, 1570a, 1570b, 1580a, and 1580b for manually manipulating an angle change on the display. The icons 1560, 1570, and 1580 that may be manually manipulated by the user to switch angles may include, e.g., a main indicator 1560 that indicates its own status or at least one sub indicator 1570 and 1580 that indicates the other party's status. For example, the main indicator 1560 has a semicircular shape and may boom in response to a speech. The booming may correspond to a reaction in which the semicircular shape gradually spreads. For example, at least one sub indicator 1570 and 1580 may be toggled by the user's touch. The at least one sub indicator 1570 and 1580 may change color or brightness in response to the operation state according to the toggling. The sub indicators 1570 and 1580 may be created by reflecting the number of other parties participating in the conversation around the user or the positions on the screen. The states identifiable by the sub indicators 1570 and 1580 may include, e.g., a first display state 1570a and 1580a indicating an operation state that automatically changes the screen depending on the speaker. The states identifiable by the sub indicators 1570a, 1570b, 1580a, and 1580b may include a second display state 1570b and 1580b indicating an operation state in which manual control is possible to focus the screen on the other party's avatar 1510 or 1520 desired by the user. For example, in proportion to the number of times the user taps the sub indicators 1570 and 1580, the first display state 1570a and 1580a and the second display state 1570b and 1580b may be alternately switched.

For example, (a) illustrates a situation where the sub indicators 1570 and 1580 are displayed in the first display state 1570a and 1580a. In the first display state 1570a and 1580a, the electronic device 110 may perform the operation of automatically changing the screen depending on the speaker. For example, the electronic device 110 may provide a screen with the other party's avatar 1510 or 1520 to be looked at by the user's avatar changed in proportion to the swiping distance.

For example, (b) illustrates a situation in which the first sub indicator 1570 corresponding to the first other party avatar 1510 is displayed in the second display state 1570b, and the second sub indicator 1580 corresponding to the second other party avatar 1520 is displayed in the first display state 1580a. Since the first sub indicator 1570 is in the second display state 1570b, the electronic device 110 may provide a screen in which the center or focus of the screen is on the first other party avatar 1510.

For example, (c) illustrates a situation in which the first sub indicator 1570 corresponding to the first other party avatar 1510 is displayed in the first display state 1570a, and the second sub indicator 1580 corresponding to the second other party avatar 1520 is displayed in the second display state 1580b. Since the second sub indicator 1580 is in the second display state 1580b, the electronic device 110 may provide a screen in which the center or focus of the screen is on the second other party avatar 1520.

As illustrated, as the angle of the avatar-based conversation screen is adjusted in response to the user's manual manipulation, it is possible to provide the user with a more realistic conversation experience in the virtual space.

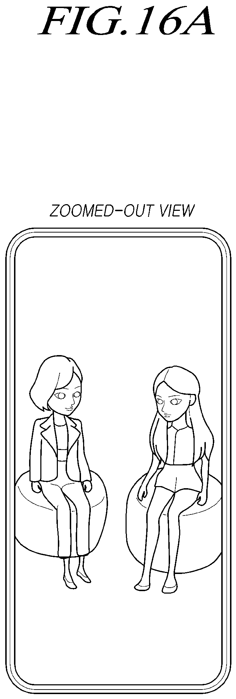

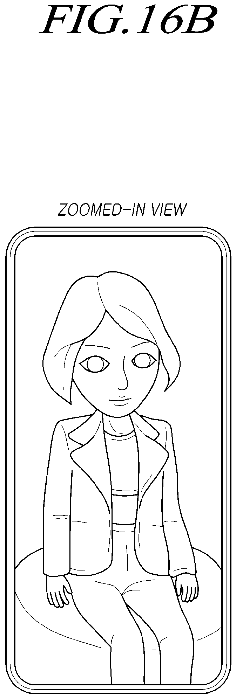

FIG. 16 illustrates an example of switching a field-of-view corresponding to a configuration requirement in an electronic device 110 (e.g., the electronic device 110 of FIG. 1) according to an embodiment.

Referring to FIG. 16, the electronic device 110 may provide a conversation screen (a) in a zoomed-out view or a conversation screen (b) in a zoomed-in view using preset requirements.

For example, when a participant first joins the chat room and starts a conversation, the participant's electronic device 110 may output the conversation screen (a) in the zoomed-out view through the display. For example, when the participant performs a manual manipulation to identify all conversation participants, the participant's electronic device 110 may output the conversation screen (a) in the zoomed-out view through the display. For example, when all participants participating in the conversation speak at the same time or no one speaks, the participant's electronic device 110 may output the conversation screen (a) in the zoomed-out view through the display. For example, when participants participating in the conversation exchange conversations at short intervals (e.g., three seconds), the participant's electronic device 110 may output the conversation screen (a) in the zoomed-out view through the display. For example, when a specific participant speaks for a longer period of time than a preset time, the electronic device 110 may output the conversation screen (b) providing a zoomed-in view for the avatar of the specific participant through the display. For example, when the participant manually selects the specific participant, the participant's electronic device 110 may output the conversation screen (b) providing a zoomed-in view for the avatar of the specific participant through the display.

As described above, the zoom-out requirements to provide a zoomed-out view to the conversation screen may include situations in which a participant first joins the chat room and initiates a conversation, a participant performs a manual manipulation to identify all participants in the conversation, all participants in the conversation speak simultaneously or no one speaks, or participants exchange conversations at short intervals (e.g., three seconds). The zoom-in requirements for providing a zoomed-in view to the conversation screen may include situations in which a specific participant speaks for a longer time than a preset time or a specific participant is manually selected.

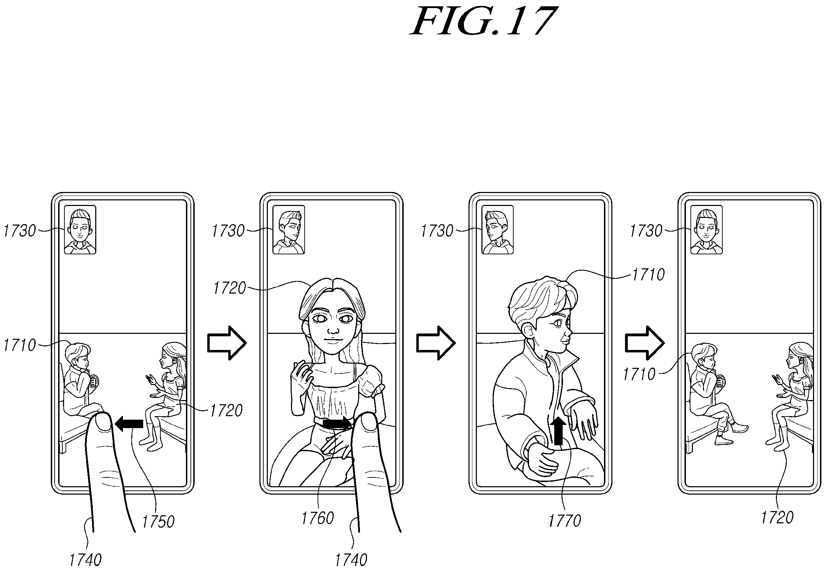

FIG. 17 illustrates an example of switching a view (field-of-view) in response to manual manipulation in an electronic device (e.g., the electronic device 110 of FIG. 1) according to an embodiment.

Referring to FIG. 17, the electronic device 110 may preset a swipe pattern for manually manipulating the view switch and provide a conversation screen in which the view is switched in response to the swipe pattern manually input by the user.

For example, when the user 1740 enters a swipe pattern 1750 from right to left on the first conversation screen where the first avatar 1710 and the second avatar 1720 are conversing, the electronic device 110 may output a second conversation screen which provides a zoomed-in view for the second avatar 1720 while shifting the camera angle to the right through the display.

For example, when the user 1740 enters a swipe pattern 1760 from left to right on the second conversation screen providing a zoomed-in view for the second avatar 1720, the electronic device 110 may output a third conversation screen which provides a zoomed-in view for the first avatar 1710 while shifting the camera angle to the left through the display.

For example, when the user 1740 enters a swipe pattern 1770 from down to up on the third conversation screen providing a zoomed-in view for the first avatar 1710, the electronic device 110 may output a fourth conversation screen providing a zoomed-out view for the first and second avatars 1710 and 1720 while shifting the camera angle near the centers of the two avatars 1710 and 1720, through the display.

The user's image 1730 captured by the camera may be displayed at the top left of first to fourth conversation screens displayed on the display of the electronic device 110.

As described above, the user may receive a conversation screen having a desired view by merely entering a preset simple swipe pattern on the display.

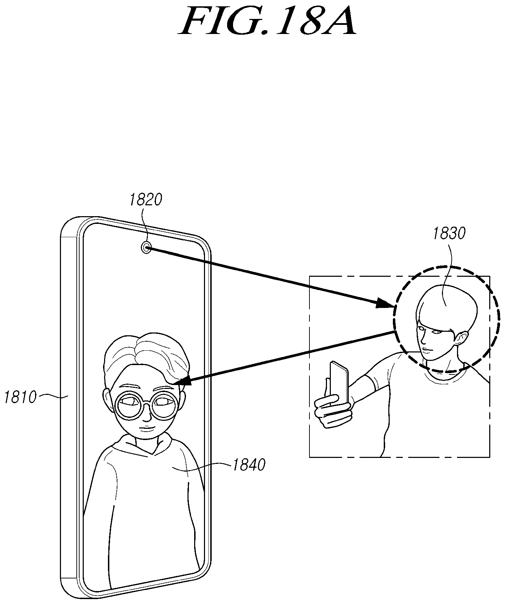

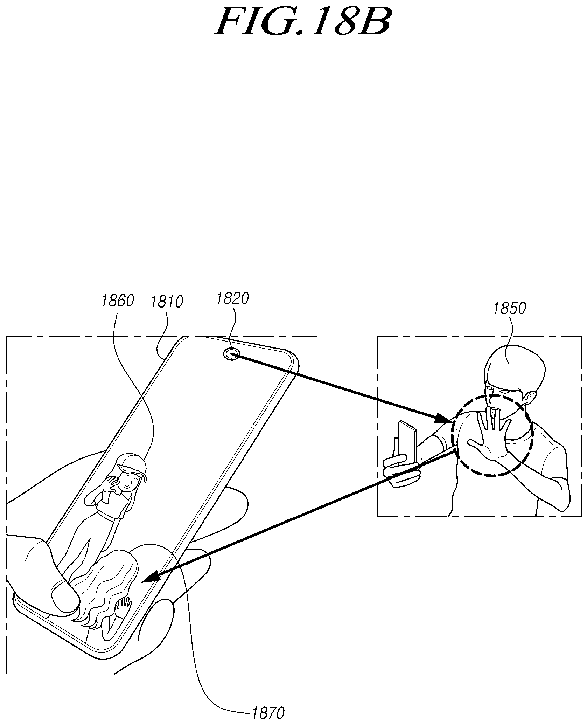

FIGS. 18A and 18B illustrate an example of mirroring a user's motion to an avatar using an image captured by a camera in an electronic device (e.g., the electronic device 110 of FIG. 1) according to an embodiment.

Referring to FIG. 18A, the electronic device 110 may capture the user to include the user's face 1830 through the front camera 1820 and apply the face tracking function thereto to analyze the facial expression of the face 1830 in the captured image. The electronic device 110 may mirror the analyzed facial expression to the facial expression of the avatar 1840 displayed on the screen of the display 1810 and represent it.

Referring to FIG. 18B, the electronic device 110 may capture the user to include the user's hand 1850 through the front camera 1820 and apply the hand tracking function thereto to analyze the motion of the hand 1850 in the captured image. The electronic device 110 may mirror the analyzed motion to the hand motion of the avatar 1870 displayed on the screen of the display 1810 and represent it. The electronic device 110 may receive an image of a participant participating in the chat room, captured by the electronic device of the participant through the camera and analyze the motion of the hand 1850 in the received image. The electronic device 110 may mirror the analyzed motion to the motion of the other party avatar 1860 displayed on the screen of the display 1810 and represent it.

The electronic device 110 may additionally consider sensing information provided from a wearable device (e.g., the wearable device 120 of FIG. 1) to accurately analyze the user's motion. For example, the electronic device 110 may receive sensing information detected by at least one sensor (e.g., gyroscope sensor) included in a smart watch, which is one of the wearable devices 120, to accurately analyze the user's hand motion.

As described above, the electronic device 110 may obtain a facial expression or gesture from the user's image captured by the front camera and mirror the obtained facial expression or gesture to the user's avatar included in the conversation screen and represent it.

As described above, the electronic device 110 may obtain the facial expressions or gestures of the participants from the collected data and mirror the obtained facial expressions or gestures of the participants to the avatars of the participants included in the conversation screen and represent it.

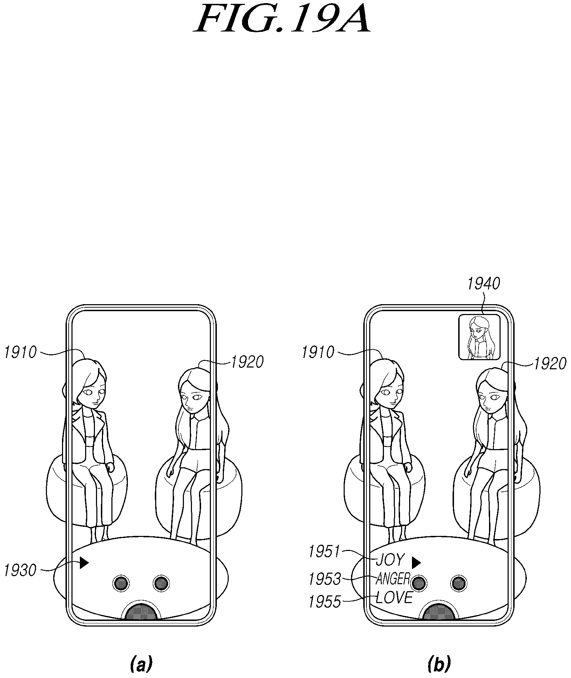

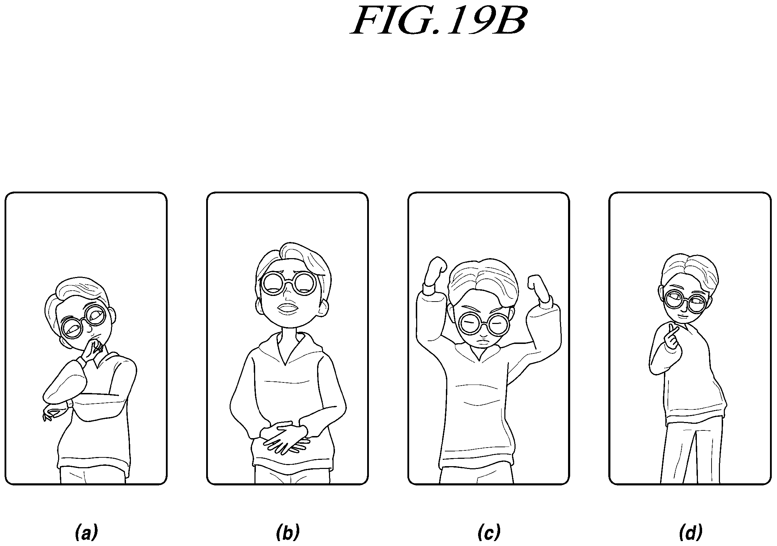

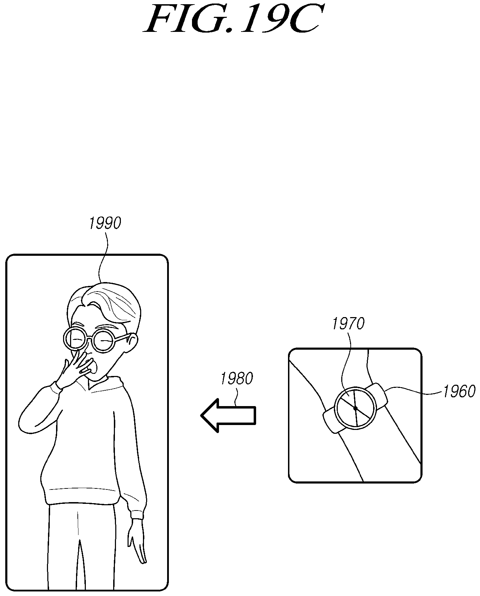

FIGS. 19A, 19B, and 19C illustrate examples of motion preset to be applicable to an avatar in an electronic device (e.g., the electronic device 110 of FIG. 1) according to an embodiment.

Referring to FIG. 19A, the electronic device 110 may preset motions of the avatars 1910 and 1920 that are expected to be frequently used by the user, such as (a) joy 1951, (b) anger 1953, and (c) expression of love 1955.

As an example, (a) illustrates a conversation screen in which a first avatar 1910 and a second avatar 1920 representing two participants join a conversation. The conversation screen may include, e.g., a function key 1930 for activating icons 1951, 1953, and 1955 for expressing the user's own state. The function key 1930 may be manipulated for the user to transfer his or her emotions using preset avatar gestures. The user's manipulation may be performed by, e.g., touching the function key 1930.

As an example, in (b), icons 1951, 1953, and 1955 through which a preset avatar gesture is selectable by the electronic device 110 as the user manipulates the function key 1930 may be displayed. The user may select one of the displayed icons 1951, 1953, and 1955. When an icon is selected by the user, the electronic device 110 may transfer an avatar image making a gesture prepared to express the emotion corresponding to the selected icon to the other party's electronic device. In this case, an image 1940 in which the avatar representing the user makes the selected gesture may be displayed on the other party's electronic device.

Referring to FIG. 19B, the electronic device 110 may preset avatar motions that are expected to be frequently used by the user, such as (a) thinking, (b) laughing, (c) cheering, and (d) expression of love. The electronic device 110 may analyze the user's manual manipulation or captured image or voice, and mirror a motion corresponding to one of the preset motions to the avatar.

Referring to FIG. 19C, the electronic device 110 may obtain (1980) sensing information 1970 indicating the state of the user from an external electronic device 1960, such as a wearable device, that may be connected through a wireless channel. The electronic device 110 may predict the user's body state or the user's motion based on the sensing information. The electronic device 110 may represent the predicted user's body state or motion as the motion of the avatar included on behalf of the user on the conversation screen.

As an example, when the electronic device 110 recognizes that the user is sleeping based on the sensing information provided by a smart watch, which is one of the wearable devices, the electronic device 110 may display that the avatar 1990 included in the conversation screen on behalf of the user makes a gesture expressing tiredness. Further, the electronic device 110 may transfer information indicating the user's state to the other party's electronic device based on a network environment. In this case, the other participant's electronic device may display the avatar representing the corresponding user to make a gesture expressing tiredness.

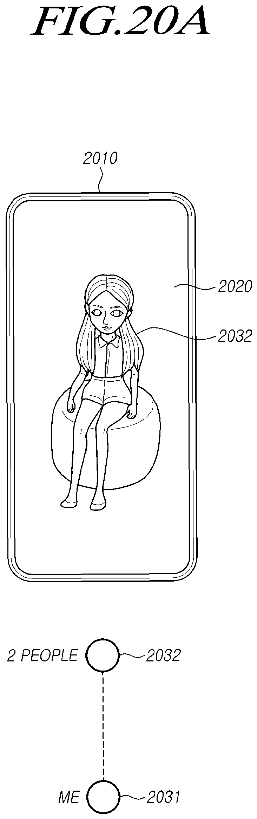

FIGS. 20A to 20E illustrate an example of changing a screen shape considering the number of participants in an electronic device (e.g., the electronic device 110 of FIG. 1) according to an embodiment.

Referring to FIG. 20A, the electronic device 2010 may output a conversation screen with the other party's avatar 2032 positioned near the center of the display 2020 where the screen is in the portrait type when two people have a conversation. For immersion purposes, the electronic device 2010 may not display the user's avatar 2031 on the screen but may rather make it transparent and keep the field-of-view constant.

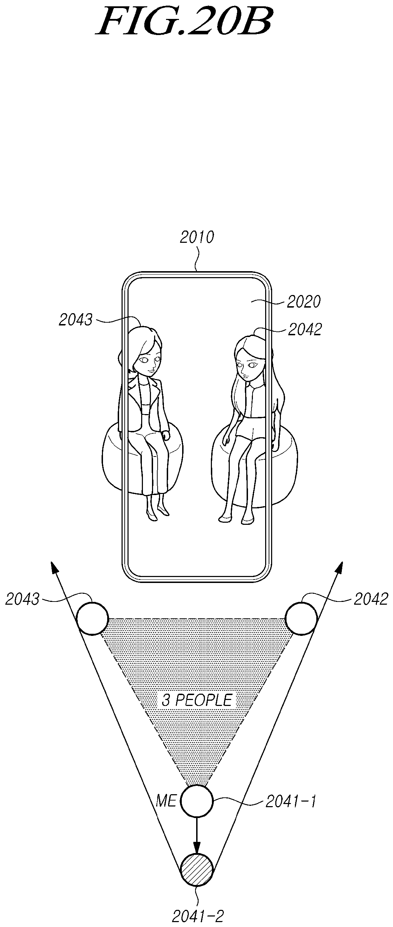

Referring to FIG. 20B, the electronic device 2010 may output a conversation screen in which the other parties' avatars 2042 and 2043 are disposed on two opposite sides of the center of the display 2020 where the screen is in the portrait type when three people have a conversation. In this case, the electronic device 2010 may make its avatar transparent without displaying it on the screen and move the viewpoint of its avatar from the previous position 2041-1 to a position 2041-2 which is away from those of the other parties' avatars 2042 and 2043 to have a wider field-of-view than that when two people have a conversation.

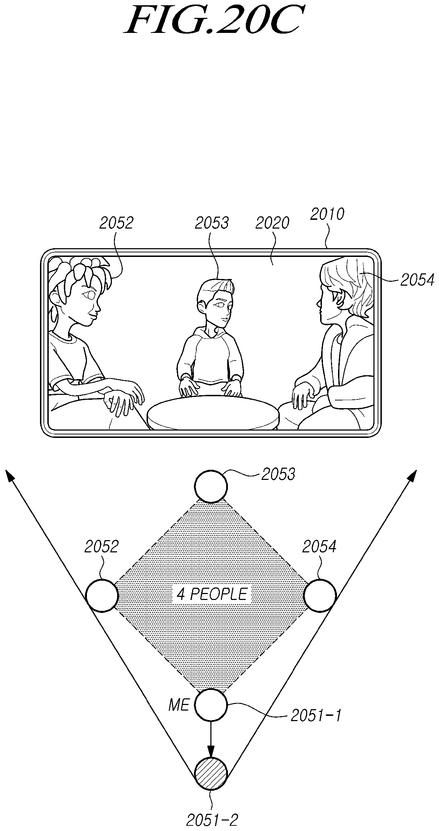

Referring to FIG. 20C, the electronic device 2010 may output a conversation screen with the other party's avatars 2052, 2053, and 2054 positioned near the center, and on two opposite sides, of the display 2020 where the screen is in the landscape type when four people have a conversation. In this case, the electronic device 2010 may make its avatar transparent without displaying it on the screen and move the viewpoint of its avatar from the previous position 2051-1 to a position 2051-2 which is away from those of the other parties' avatars 2052, 2053, and 2054 to have a wider field-of-view than that when three people have a conversation.

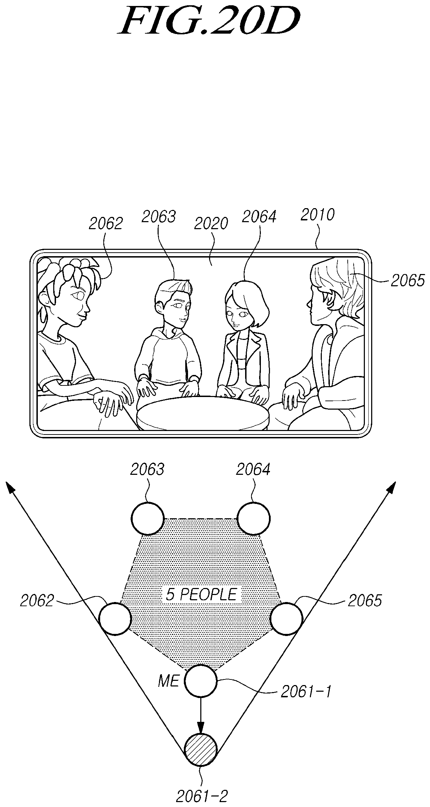

Referring to FIG. 20D, the electronic device 2010 may output a conversation screen with the other party's avatars 2062, 2063, 2064, and 2065 positioned near the center, and on two opposite sides, of the display 2020 where the screen is in the landscape type when five people have a conversation. In this case, the electronic device 2010 may make its avatar transparent without displaying it on the screen and move the viewpoint of its avatar from the previous position 2061-1 to a position 2061-2 which is away from those of the other parties' avatars 2062, 2063, 2064, and 2065 to have a wider field-of-view than that when four people have a conversation.

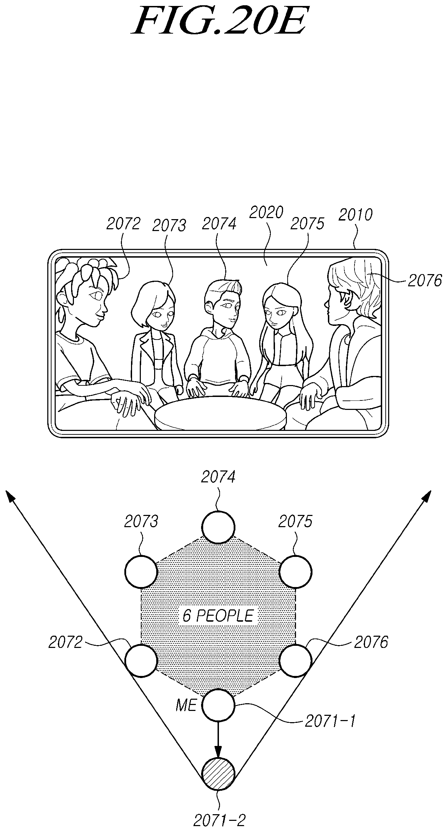

Referring to FIG. 20E, the electronic device 2010 may output a conversation screen with the other party's avatars 2072, 2073, 2074, 2075, and 2076 disposed, substrate at equal intervals, on the display 2020 where the screen is in the landscape type when six people have a conversation. In this case, the electronic device 2010 may make its avatar transparent without displaying it on the screen and move the viewpoint of its avatar from the previous position 2071-1 to a position 2051-2 which is away from those of the other parties' avatars 2072, 2073, 2074, 2075, and 2076 to have a wider field-of-view than that when four people have a conversation.

As described above, the electronic device 2010 may adjust the field-of-view by considering the number of avatars participating in a conversation (or the number of participants). The electronic device 110 may output a conversation screen prepared at the adjusted field-of-view. In other words, the electronic device 110 may change the shape of the screen from the portrait type to landscape type or move the viewpoint to increase the field-of-view in proportion to the increase in the number of avatars participating in the conversation.

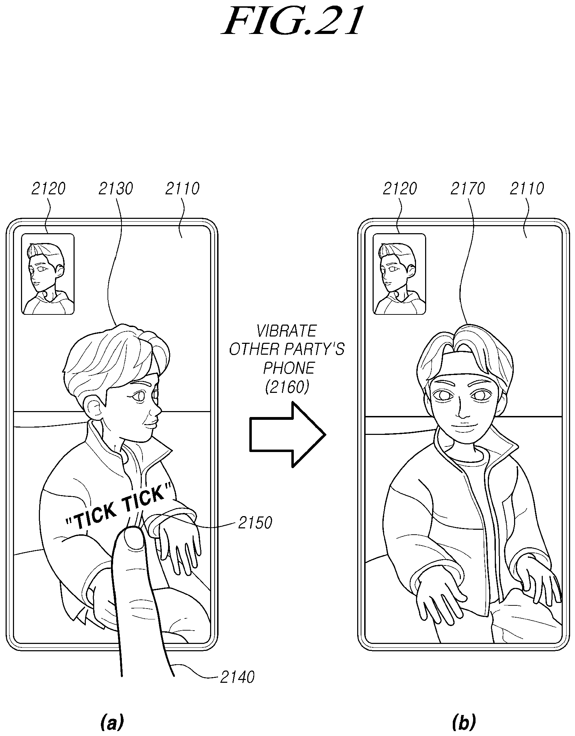

FIG. 21 illustrates an example of invoking an other party's avatar by manual manipulation in an electronic device (e.g., the electronic device 110 of FIG. 1) according to an embodiment.

Referring to FIG. 21, the electronic device 110 may output a conversation screen on the display 2110. The conversation screen may include, e.g., an other party avatar 2130 (see (a)). The conversation screen may display, e.g., the user's image 2120 captured by the camera at the top left of the display 2110. The user may use a finger 2140 to touch (2150) the other party avatar 2130 included in the conversation screen. The electronic device 110 may notify (2160) the other party's electronic device that it has been requested to invoke the avatar based on the position of the touch 2150 and the sensing information according to the touch 2150. The other party's electronic device 110 may output vibration or sound to indicate the invocation.

The electronic device 110 may analyze the information (e.g., image captured for the other party) provided from the other party's electronic device to determine whether the other party has reacted to the invocation. Upon determining that the other party has reacted to the invocation, the electronic device 110 may change the image so that the other party avatar 2170 looks at the user and display it on the display 2110 (see (b)).

As described above, upon detecting the user's touch on the conversation screen, the electronic device 110 may transmit a signal to invoke the external electronic device corresponding to the touched avatar.

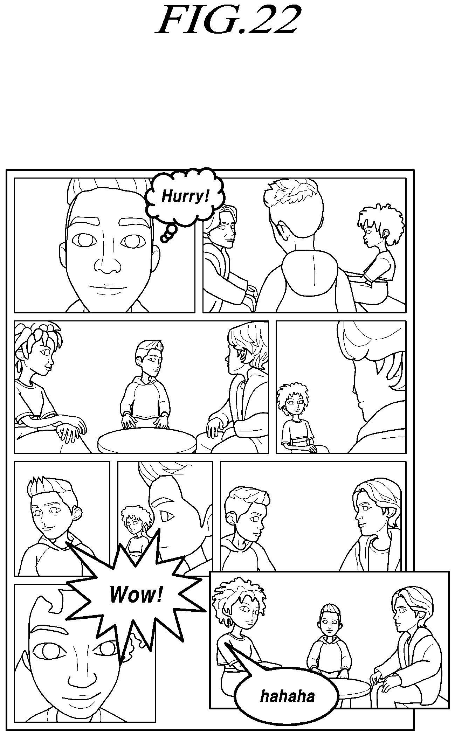

FIG. 22 illustrates an example of recording a conversation screen at the user's request in an electronic device (e.g., the electronic device 110 of FIG. 1).

Referring to FIG. 21, the electronic device 110 may extract images corresponding to the conversation based on data collected during the conversation in response to the user's request while the avatar-based conversation is in progress or after the avatar-based conversation has ended. The electronic device 110 may create a conversation record image using the extracted images. The electronic device 110 may store, or transfer to an external electronic device, the generated conversation record image.

FIG. 23 is a view illustrating a signal flow for processing a gift event during conversation using avatars in a system (e.g., the system 100 of FIG. 1).

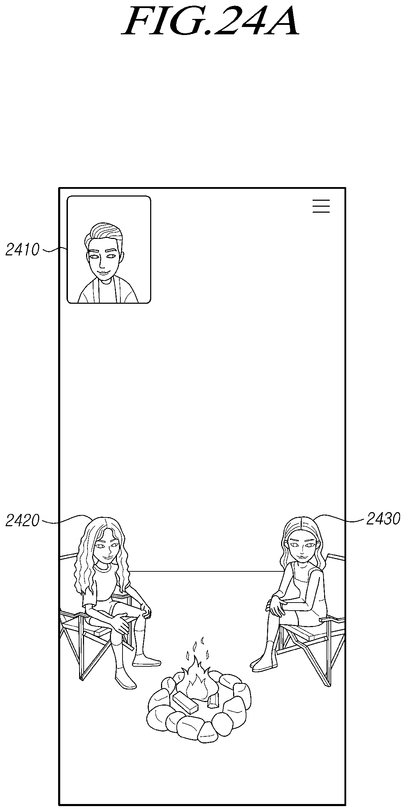

Referring to FIG. 23, in operation 2301, a first participating terminal (e.g., the first participating terminal 111 of FIG. 1) may conduct a conversation with at least one other party's terminal (e.g., the second participating terminal 113 of FIG. 1) using avatars. A detailed operation of conducting a conversation using avatars has been described above. The illustrations assume two participants in the conversation, but the operations described below may apply where there are more participants in the same or similar manner. As an example, FIG. 24A illustrates a conversation screen where three participants (e.g., first participant avatar 2410, second participant avatar 2420, and third participant avatar 2430 of FIG. 24A) are having a conversation in an opened chat room.

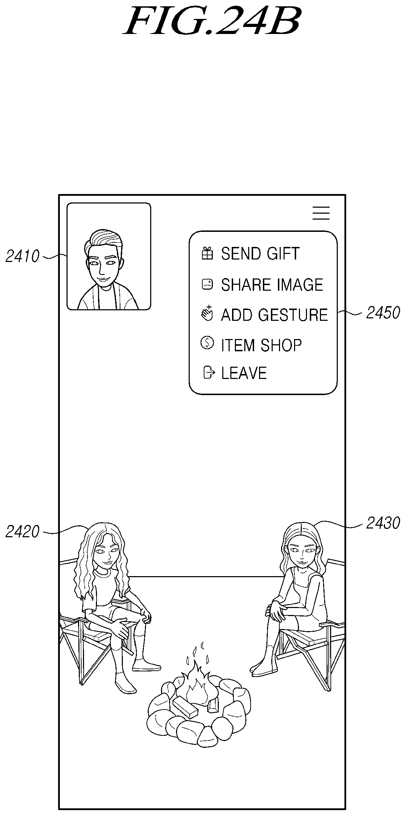

In operation 2303, the first participating terminal 111 may display a menu window on the display in response to the user's request. The menu window may include, e.g., items through which the user may select a function that may be used during a conversation using avatars. As an example, FIG. 24B illustrates a conversation screen displaying a menu window 2450 that includes items corresponding to functions such as send gift, share image, add gesture, item shop, and leave.

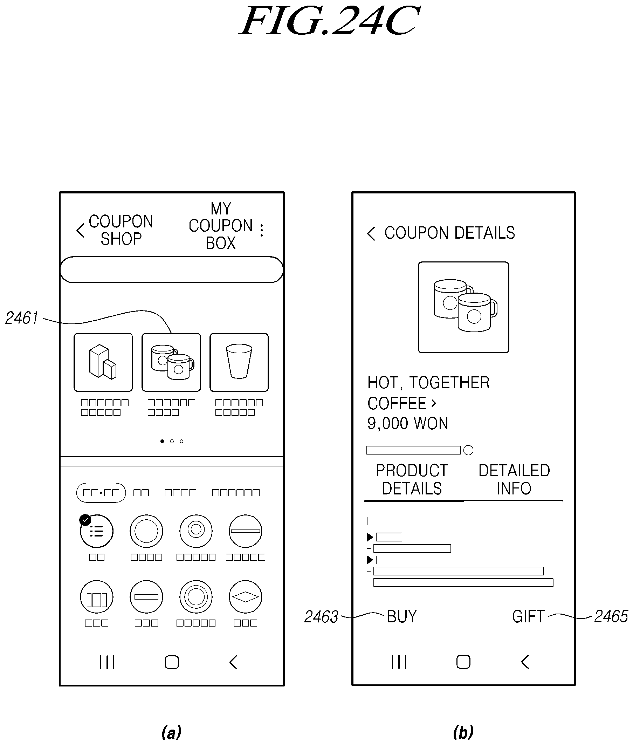

The first participating terminal 111 may identify the item selected by the user in the menu window 2450 displayed on the conversation screen. In operation 2303, the first participating terminal 111 may recognize that the user has selected a 'send gift' item from among the items included in the menu window 2450. The first participating terminal 111 may output a screen on which the user may select a send gift when the user selects the send gift item among the menu items. For example, (a) of FIG. 24C illustrates a coupon shop screen for selecting a coupon as a gift.

When the user selects the 'send gift' item from the menu items, the first participating terminal 111 may perform an operation for selecting a product to be presented and a recipient to receive the selected product in operation 2307. The user may select a product as a gift from among the products displayed on the screen. As an example, (a) of FIG. 24C assumes that a coffee coupon 2461 is selected by the user. When a product to be presented is selected by the user, the first participating terminal 111 may output detailed information about the selected product through the screen. For example, (b) of FIG. 24C illustrates a screen including detailed information about the selected coffee coupon (e.g., price information, product description, etc.) and a selection button (e.g., buy 2463 or send gift 2465) for finally selecting an event item to process the corresponding product.

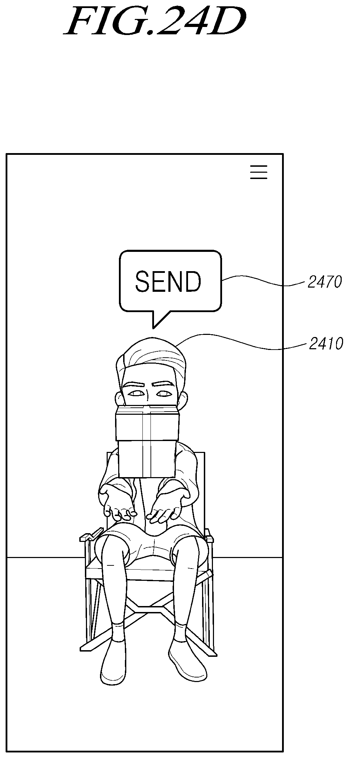

When the user completes selection of a product as a gift, the first participating terminal 111 may performs an operation for allowing the user to select a recipient (e.g., at least one of the participants participating in the conversation) to whom the product is to be transferred. As an example, FIG. 24D illustrates a screen in which a 'send' button 2470 for identifying whether to send a gift is displayed on the image of the user's avatar 2410 holding a gift box.

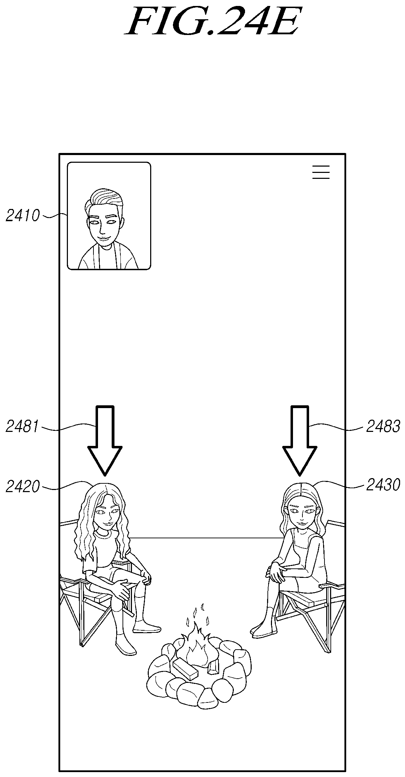

The first participating terminal 111 may request the user to select a recipient to whom the gift is to be delivered when the user touches or presses the 'send' button 2470. As an example, FIG. 24E illustrates a screen in which selection buttons 2481 and 2483 for selecting a recipient are displayed above the avatars 2420 and 2430 of the participants in the conversation. When one of the selection buttons 2481 and 2483 displayed on the screen is touched or pressed by the user, the first participating terminal 111 may recognizes that the recipient has been selected and select the avatar or participant corresponding to the touched or pressed selection button.

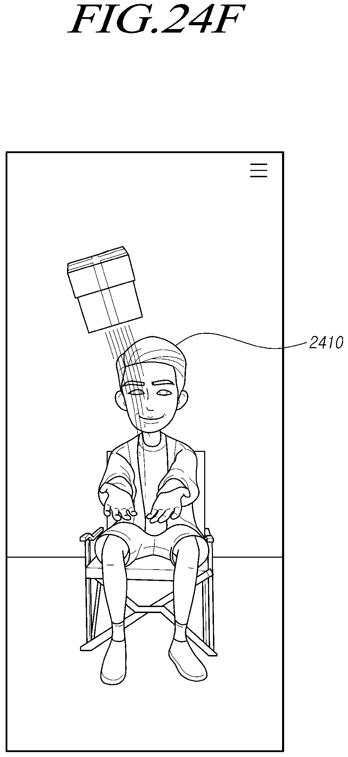

When the product as the gift and the recipient are selected, the first participating terminal 111 may display a screen in which the avatar 2410 representing the user sends the gift in operation 2309. For example, FIG. 24F illustrates a screen in which the gift box leaves the hand of the avatar 2410. The screen of the gift box leaving the hand of the avatar 2410 may be provided as a picture or video. As an example, the screen shown in FIG. 26F may also be displayed through the display of the second participating terminal 113, which is the participating terminal of the other party receiving the gift. As an example, the screen shown in FIG. 26F may be displayed through the displays of other participating terminals other than the other party's participating terminal to receive the gift. Whether the image depicting the scene in which the gift is sent is to be displayed through the display of the second participating terminal 113, which is the participating terminal of the other party to receive the gift, or the display of another terminal may be determined by the settings of the user sending the gift. Meanwhile, although not shown, to display the image depicting the scene in which the gift is being sent on the display of another participating terminal, an operation of transferring related information from the first participating terminal 111 to the corresponding participating terminal needs to be added.

In operation 2311, the first participating terminal 111 may transmit gift information for presenting the selected product to the second participating terminal 113 corresponding to the recipient to receive the gift. The gift information may include, e.g., information about the product corresponding to the gift or information about the sender of the gift.

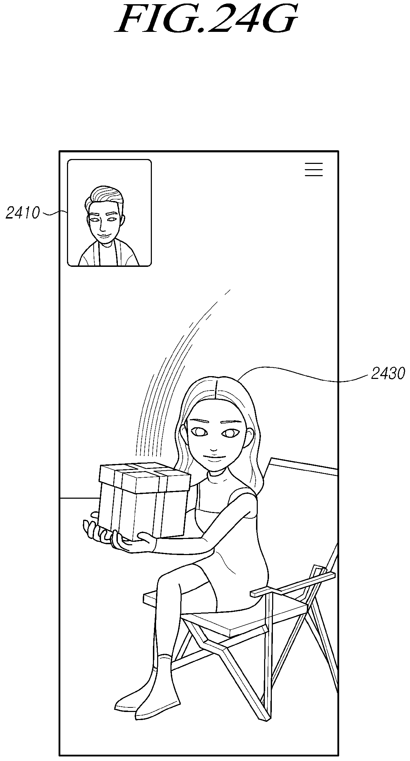

In operation 2311, the second participating terminal 113 may receive the gift information transmitted by the first participating terminal 111. Upon receiving the product information, the second participating terminal 113 may display a screen where the avatar 2430 representing the user receives the gift. For example, FIG. 24G illustrates a screen in which the gift box is dropped to the hands of the avatar 2430. The screen of the gift box being dropped to the hands of the avatar 2430 may be provided as a picture or video. As an example, the screen shown in FIG. 26G may also be displayed through the display of the first participating terminal 111, which is the participating terminal having sent the gift. As an example, the screen shown in FIG. 26G may be displayed through the displays of other participating terminals other than the second participating terminal 113 receiving the gift. Whether the image depicting the scene in which the gift is received is to be displayed through the displays of other participating terminals than the second participating terminal 113 may be determined by the settings of the user sending the gift. As an example, the screen shown in FIG. 26G may also be displayed on the displays of other participating terminals than the first participating terminal 111 or the second participating terminal 113 when the second participating terminal 113 does not reject but receives the gift.

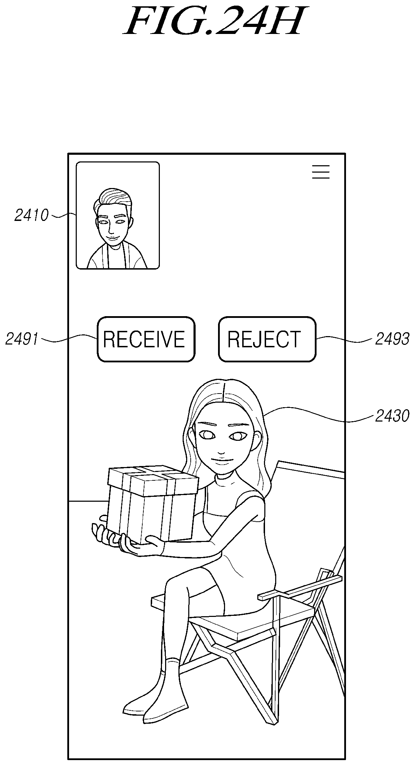

The second participating terminal 113 may perform an operation to select whether to receive or reject the gift. As an example, FIG. 24H shows a screen displaying a 'receive' button 2491 to receive the gift and/or a 'reject' button 2493 to reject the gift, on the image in which the avatar 2430 of the second participating terminal 113 holds the gift box.

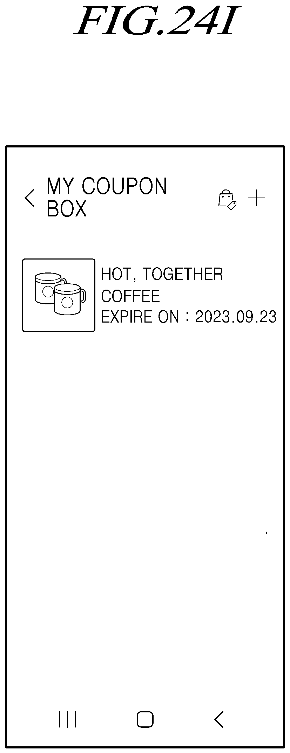

When the user touches or presses the 'receive' button 2491, the second participating terminal 113 may display information about the corresponding product or information about the sender of the gift, using the received gift information. As an example, FIG. 24i illustrates a screen displaying my 'coupon box' including a 'coffee coupon' received as a gift.

When the user touches or presses the 'receive' button 2491, the second participating terminal 113 may transmit a message confirming that the gift has been transferred, to the first participating terminal 111 in operation 2315.

In operation 2315, the first participating terminal 111 may receive a gift delivery confirm message from the second participating terminal 113. Upon receiving the gift delivery confirm message, the first participating terminal 111 may output a screen in which the other party avatar 2430 receives the gift in operation 2317. The screen output from the first participating terminal 111 may be, e.g., the same screen as that of FIG. 24G.

FIGS. 24A to 24I are views illustrating an example user interface (UI) for each procedure for transferring a gift on a conversation screen using an avatar according to an embodiment; and

FIG. 24A illustrates an example conversation screen where three participants (e.g., first participant avatar 2410, second participant avatar 2420, and third participant avatar 2430 of FIG. 24A) join an opened chat room.

FIG. 24B illustrates an example conversation screen displaying a menu window 2450 that includes items corresponding to functions, such as gift, share image, add gesture, item shop, and leave.

(a) of FIG. 24C illustrates an example screen representing a coupon shop selling coupons, e.g., the coffee coupon 2461, for selecting gifts, and (b) of FIG. 24C illustrates an example screen including detailed information (e.g., price information, product description, etc.) about the selected coffee coupon 2661 and a select button (e.g., buy 2463 or send gift 2465) for finally selecting an event item to process the corresponding product.

FIG. 24D illustrates an example screen in which a 'send' button 2470 for identifying whether to send a gift is displayed on the image of the user's avatar 2410 holding a gift box.

FIG. 24E is a view illustrating an example screen in which selection buttons 2481 and 2483 for selecting a recipient are displayed above the avatars 2420 and 2430 of the participants in the conversation.

FIG. 24F illustrates an example screen in which the gift box leaves the hand of the avatar 2410.

FIG. 24G illustrates an example screen in which the gift box is dropped to the hands of the avatar 2430.

FIG. 24H shows an example screen displaying a 'receive' button 2491 to receive the gift and/or a 'reject' button 2493 to reject the gift, on the image in which the avatar 2430 of the second participating terminal (e.g., the second participating terminal 113 of FIG. 1) holds the gift box.

FIG. 24I illustrates an example screen displaying my 'coupon box' including the 'coffee coupon' received as a gift.

FIG. 25 is a block diagram illustrating an electronic device 2501 (e.g., the electronic device 110 of FIG. 1) in a network environment 2500 according to various embodiments.

Referring to FIG. 25, the electronic device 2501 in the network environment 2500 may communicate with at least one of an electronic device 2502 via a first network 2598 (e.g., a short-range wireless communication network), or an electronic device 2504 or a server 2508 via a second network 2599 (e.g., a long-range wireless communication network). According to an embodiment, the electronic device 2501 may communicate with the electronic device 2504 via the server 2508. According to an embodiment, the electronic device 2501 may include a processor 2520, memory 2530, an input module 2550, a sound output module 2555, a display module 2560, an audio module 2570, a sensor module 2576, an interface 2577, a connecting terminal 2578, a haptic module 2579, a camera module 2580, a power management module 2588, a battery 2589, a communication module 2590, a subscriber identification module (SIM) 2596, or an antenna module 2597. In an embodiment, at least one (e.g., the connecting terminal 2578) of the components may be omitted from the electronic device 2501, or one or more other components may be added in the electronic device 101. According to an embodiment, some (e.g., the sensor module 2576, the camera module 2580, or the antenna module 2597) of the components may be integrated into a single component (e.g., the display module 2560).

The processor 2520 may execute, for example, software (e.g., a program 2540) to control at least one other component (e.g., a hardware or software component) of the electronic device 2501 coupled with the processor 2520, and may perform various data processing or computation. According to an embodiment, as at least part of the data processing or computation, the processor 2520 may store a command or data received from another component (e.g., the sensor module 2576 or the communication module 2590) in volatile memory 2532, process the command or the data stored in the volatile memory 2532, and store resulting data in non-volatile memory 2534. According to an embodiment, the processor 2520 may include a main processor 2521 (e.g., a central processing unit (CPU) or an application processor (AP)), or an auxiliary processor 2523 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 2501 includes the main processor 2521 and the auxiliary processor 2523, the auxiliary processor 2523 may be configured to use lower power than the main processor 2521 or to be specified for a designated function. The auxiliary processor 2523 may be implemented as separate from, or as part of the main processor 2521.

The auxiliary processor 2523 may control at least some of functions or states related to at least one component (e.g., the display module 2560, the sensor module 2576, or the communication module 2590) among the components of the electronic device 2501, instead of the main processor 2521 while the main processor 2521 is in an inactive (e.g., sleep) state, or together with the main processor 2521 while the main processor 2521 is in an active state (e.g., executing an application). According to an embodiment, the auxiliary processor 2523 (e.g., an image signal processor or a communication processor) may be implemented as part of another component (e.g., the camera module 2580 or the communication module 2590) functionally related to the auxiliary processor 123. According to an embodiment, the auxiliary processor 2523 (e.g., the neural processing unit) may include a hardware structure specified for artificial intelligence model processing. The artificial intelligence model may be generated via machine learning. Such learning may be performed, e.g., by the electronic device 2501 where the artificial intelligence is performed or via a separate server (e.g., the server 2508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2530 may store various data used by at least one component (e.g., the processor 2520 or the sensor module 2576) of the electronic device 2501. The various data may include, for example, software (e.g., the program 2540) and input data or output data for a command related thereto. The memory 2530 may include the volatile memory 2532 or the non-volatile memory 2534. The non-volatile memory 2532 may include the internal memory 2536 or the external memory 2538.

The program 2540 may be stored in the memory 2530 as software, and may include, for example, an operating system (OS) 2542, middleware 2544, or an application 2546.

The input module 2550 may receive a command or data to be used by other component (e.g., the processor 2520) of the electronic device 2501, from the outside (e.g., a user) of the electronic device 2501. The input module 2550 may include, for example, a microphone, a mouse, a keyboard, keys (e.g., buttons), or a digital pen (e.g., a stylus pen).

The sound output module 2555 may output sound signals to the outside of the electronic device 2501. The sound output module 2555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2560 may visually provide information to the outside (e.g., a user) of the electronic device 2501. The display 2560 may include, for example, a display, a hologram device, or a projector and control circuitry to control a corresponding one of the display, hologram device, and projector. According to an embodiment, the display 2560 may include a touch sensor configured to detect a touch, or a pressure sensor configured to measure the intensity of a force generated by the touch.

The audio module 2570 may convert a sound into an electrical signal and vice versa. According to an embodiment, the audio module 2570 may obtain the sound via the input module 2550, or output the sound via the sound output module 2555 or a headphone of an external electronic device (e.g., an electronic device 2502) directly (e.g., wiredly) or wirelessly coupled with the electronic device 2501.

The sensor module 2576 may detect an operational state (e.g., power or temperature) of the electronic device 2501 or an environmental state (e.g., a state of a user) external to the electronic device 101, and then generate an electrical signal or data value corresponding to the detected state. According to an embodiment, the sensor module 2576 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 2577 may support one or more specified protocols to be used for the electronic device 2501 to be coupled with the external electronic device (e.g., the electronic device 2502) directly (e.g., wiredly) or wirelessly. According to an embodiment, the interface 2577 may include, for example, a high definition multimedia interface (HDMI), a universal serial bus (USB) interface, a secure digital (SD) card interface, or an audio interface.

A connecting terminal 2578 may include a connector via which the electronic device 2501 may be physically connected with the external electronic device (e.g., the electronic device 2502). According to an embodiment, the connecting terminal 2578 may include, for example, a HDMI connector, a USB connector, a SD card connector, or an audio connector (e.g., a headphone connector).

The haptic module 2579 may convert an electrical signal into a mechanical stimulus (e.g., a vibration or motion) or electrical stimulus which may be recognized by a user via his tactile sensation or kinesthetic sensation. According to an embodiment, the haptic module 2579 may include, for example, a motor, a piezoelectric element, or an electric stimulator.

The camera module 2580 may capture a still image or moving images. According to an embodiment, the camera module 2580 may include one or more lenses, image sensors, image signal processors, or flashes.

The power management module 2588 may manage power supplied to the electronic device 2501. According to an embodiment, the power management module 2588 may be implemented as at least part of, for example, a power management integrated circuit (PMIC).

The battery 2589 may supply power to at least one component of the electronic device 2501. According to an embodiment, the battery 2589 may include, for example, a primary cell which is not rechargeable, a secondary cell which is rechargeable, or a fuel cell.

The communication module 2590 may support establishing a direct (e.g., wired) communication channel or a wireless communication channel between the electronic device 2501 and the external electronic device (e.g., the electronic device 2502, the electronic device 2504, or the server 2508) and performing communication via the established communication channel. The communication module 2590 may include one or more communication processors that are operable independently from the processor 2520 (e.g., the application processor (AP)) and supports a direct (e.g., wired) communication or a wireless communication. According to an embodiment, the communication module 2590 may include a wireless communication module 2592 (e.g., a cellular communication module, a short-range wireless communication module, or a global navigation satellite system (GNSS) communication module) or a wired communication module 2594 (e.g., a local area network (LAN) communication module or a power line communication (PLC) module). A corresponding one of these communication modules may communicate with the external electronic device 2504 via a first network 2598 (e.g., a short-range communication network, such as Bluetooth^{™}, wireless-fidelity (Wi-Fi) direct, or infrared data association (IrDA)) or a second network 2599 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 2592 may identify or authenticate the electronic device 2501 in a communication network, such as the first network 2598 or the second network 2599, using subscriber information (e.g., international mobile subscriber identity (IMSI)) stored in the subscriber identification module 2596.

The wireless communication module 2592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2592 may support a high-frequency band (e.g., the mmWave band) to achieve, e.g., a high data transmission rate. The wireless communication module 2592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2592 may support various requirements specified in the electronic device 2501, an external electronic device (e.g., the electronic device 2504), or a network system (e.g., the second network 2599). According to an embodiment, the wireless communication module 2592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2597 may transmit or receive a signal or power to or from the outside (e.g., the external electronic device). According to an embodiment, the antenna module 2597 may include an antenna including a radiator formed of a conductor or conductive pattern formed on a substrate (e.g., a printed circuit board (PCB)). According to an embodiment, the antenna module 2597 may include a plurality of antennas (e.g., an antenna array). In this case, at least one antenna appropriate for a communication scheme used in a communication network, such as the first network 2598 or the second network 2599, may be selected from the plurality of antennas by, e.g., the communication module 2590. The signal or the power may then be transmitted or received between the communication module 2590 and the external electronic device via the selected at least one antenna. According to an embodiment, other parts (e.g., radio frequency integrated circuit (RFIC)) than the radiator may be further formed as part of the antenna module 2597.

According to various embodiments, the antenna module 2597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2501 and the external electronic device 2504 via the server 2508 coupled with the second network 2599. The external electronic devices 2502 or 2504 each may be a device of the same or a different type from the electronic device 2501. According to an embodiment, all or some of operations to be executed at the electronic device 2501 may be executed at one or more of the external electronic devices 2502, 2504, or 2508. For example, if the electronic device 2501 should perform a function or a service automatically, or in response to a request from a user or another device, the electronic device 2501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2501. The electronic device 2501 may provide the outcome, with or without further processing of the outcome, as at least part of a reply to the request. To that end, a cloud computing, distributed computing, mobile edge computing (MEC), or client-server computing technology may be used, for example. The electronic device 2501 may provide ultra low-latency services using, e.g., distributed computing or mobile edge computing. In another embodiment, the external electronic device 2504 may include an Internet-of-things (IoT) device. The server 2508 may be an intelligent server using machine learning and/or a neural network. According to an embodiment, the external electronic device 2504 or the server 2508 may be included in the second network 2599. The electronic device 2501 may be applied to intelligent services (e.g., smart home, smart city, smart car, or healthcare) based on 5G communication technology or IoT-related technology.

According to an embodiment, an electronic device 110 may comprise a camera module 1150 including a front camera and configured to output an electrical signal obtained by capturing a subject, a display module 1120 including a display panel 1121 or a touch panel 1123 and configured to display an image on the display panel 1121 or output an electrical signal according to a touch on the touch panel 1123, a communication module 1170 configured to perform communication with an external electronic device 120 or 130 based on a network environment, and at least one processor 1110 configured to control an operation of the camera module 1150, the display module 1120, or the communication module 1170 by an electrical connection with the camera module 1150, the display module 1120, or the communication module 1170.

According to an embodiment, the at least one processor 1110 may display an avatar of at least one participant among a plurality of participants including a user of the electronic device 110 in a virtual space provided for a conversation function.

According to an embodiment, the at least one processor 1110 may display an utterance indicator indicating an utterance state in response to an utterance of at least one speaker among the plurality of participants.

According to an embodiment, the at least one processor 1110 may control the display module 1120 to display the avatar whose gaze is changed in the virtual space based on the utterance of the at least one speaker.

According to an embodiment, the at least one processor 1110 may control the display module 1120 to display an avatar of at least one other participant except for the user among the plurality of participants in the virtual space.

According to an embodiment, the at least one processor 1110 may control the display module 1120 to display a second avatar to represent at least one other participant in a gazing direction of a first avatar representing the user, around the first avatar in the virtual space, and change at least one of an angle, a field-of-view, or a focal position of a virtual camera to be considered to display the first avatar or the second avatar in the virtual space, or the virtual space, considering the number of the plurality of participants.

According to an embodiment, the at least one processor 1110 may control the display module 1120 to display a plurality of avatars at different depths in the virtual space when the plurality of avatars are displayed in the virtual space.

According to an embodiment, the at least one processor 1110 may identify a speaker switch among the plurality of participants based on data collected from the external electronic device 120 or 130 through the communication module 1170, configure a first conversation screen at a camera angle changed with respect to a speaker avatar corresponding to the switched speaker, and control the display module 1120 to display the first conversation screen.

According to an embodiment, the at least one processor 1110 may obtain a voice characteristic for each participant based on voice data included in the collected data, and determine the speaker avatar using information about a preset reference voice characteristic and the obtained voice characteristic.

According to an embodiment, the at least one processor 1110 may configure a second conversation screen at a camera angle changed based on an electrical signal provided from the display module 1120 in response to a swipe on the touch panel 1123, and control the display module 1120 to display the second conversation screen.

According to an embodiment, the electronic device 110 may further comprise a sensor module 1160 including at least one sensor and configured to detect, at least, a motion of the electronic device 110 in a left/right or up/down direction to output an electrical sensing signal.

According to an embodiment, the at least one processor may configure a third conversation screen at a camera angle changed based on the electrical sensing signal provided from the sensor module 1160, and control the display module 1120 to display the third conversation screen.

According to an embodiment, the at least one processor 1110 may control the display module 1120 to display a fourth conversation screen provided by a first field-of-view according to a zoom-in in response to a swipe on the touch panel 1123 or a speaking time of a specific avatar not exceeding a threshold time and control the display module 1120 to display a fifth conversation screen provided by a second field-of-view according to a zoom-out in response to a swipe on the touch panel 1123 or the speaking time of the specific avatar exceeding the threshold time.

According to an embodiment, the at least one processor 1110 may be configured to obtain a facial expression or gesture from the user's image captured by the front camera included in the camera module 1150 or obtain a facial expression or gesture of the other participant from the collected data, and control the display module 1120 to mirror the obtained facial expression or the obtained gesture to the user's avatar or the other participant's avatar.

According to an embodiment, the at least one processor 1110 may, upon detecting the user's touch on the avatar through the touch panel 1123, control the communication module 1170 to transmit a signal to invoke an external electronic device 130 corresponding to the touched avatar, extract images corresponding to a conversation between the plurality of participants conducted in the virtual space, and generate and store a conversation record image using the extracted images.

According to an embodiment, a method for providing a conversation function using an avatar in an electronic device may comprise displaying an avatar of at least one participant among a plurality of participants including a user of the electronic device in a virtual space provided for the conversation function, displaying an utterance indicator indicating an utterance state in response to an utterance of at least one speaker among the plurality of participants, and displaying the avatar whose gaze is changed in the virtual space based on the utterance of the at least one speaker.

According to an embodiment, displaying the avatar may include displaying an avatar of at least one other participant except for the user among the plurality of participants in the virtual space.

According to an embodiment, displaying the avatar may include displaying a second avatar to represent at least one other participant in a gazing direction of a first avatar representing the user, around the first avatar in the virtual space, and changing at least one of an angle, a field-of-view, or a focal position of a virtual camera to be considered to display the first avatar or the second avatar in the virtual space, or the virtual space, considering the number of the plurality of participants.

According to an embodiment, displaying the avatar may include displaying a plurality of avatars at different depths in the virtual space when the plurality of avatars are displayed in the virtual space.

According to an embodiment, the method may further comprise identifying (1013) a speaker switch among the plurality of participants based on data collected from the external electronic device 120 or 130 based on a network environment, configuring (1025) a first conversation screen by changing a camera angle with respect to a speaker avatar corresponding to the identified speaker, and displaying (1025) the first conversation screen.

According to an embodiment, the method may further comprise obtaining a voice characteristic for each participant based on voice data included in the collected data, and determining the speaker avatar using information about a preset reference voice characteristic and the obtained voice characteristic.

According to an embodiment, the method may further comprise configuring (1013 or 1025) a second conversation screen at a camera angle changed in response to the user's swipe, and displaying (1025) the second conversation screen.

According to an embodiment, the method may further comprise configuring (1013) a third conversation screen at a camera angle changed based on a motion of the electronic device 110 in a left/right or up/down direction, and displaying (1027) the third conversation screen.

According to an embodiment, the method may further comprise outputting (1015 or 1027) a fourth conversation screen provided by a first field-of-view according to a zoom-in in response to the user's swipe or a speaking time of a specific avatar not exceeding a threshold time, and outputting (1015 or 1027) a fifth conversation screen provided by a second field-of-view according to a zoom-out in response to the user's swipe or the speaking time of the specific avatar exceeding the threshold time,

According to an embodiment, the method may further comprise obtaining (1017) a facial expression or gesture from the user's image captured by a front camera or the other participant's facial expression or gesture from the collected data, and mirroring (1029) the obtained facial expression or the obtained gesture to the user's avatar or the other participant's avatar.

According to an embodiment, the method may further comprise, upon detecting the user's touch on the avatar, transmitting (1021 or 1033) a signal to invoke an external electronic device 130 corresponding to the touched avatar, and extracting images corresponding to a conversation between the plurality of participants conducted in the virtual space and generating and storing (1035) a conversation record image using the extracted images.

According to an embodiment, an electronic device (e.g., the electronic device 110 of FIG. 1) may comprise a camera module 1150 including a front camera and configured to output an electrical signal obtained by capturing a subject. The electronic device may comprise a display module 1120 including a display panel 1121 or a touch panel 1123 and configured to display an image on the display panel 1121 or output an electrical signal according to a touch on the touch panel 1123. The electronic device 110 may comprise a communication module 1170 configured to perform communication with an external electronic device 120 or 130 based on a network environment. The electronic device 110 may comprise at least one processor 1110 configured to control an operation of the camera module 1150, the display module 1120, or the communication module 1170 by an electrical connection with the camera module 1150, the display module 1120, or the communication module 1170.

According to an embodiment, the at least one processor 1110 may identify a speaker switch among participants of a conversation using avatars based on data collected from the external electronic device 120 or 130 through the communication module 1170. The at least one processor 1110 may configure a first conversation screen at a camera angle changed with respect to a speaker avatar corresponding to the switched speaker. The at least one processor 1110 may control the display module 1120 to display the first conversation screen on the display panel 1121.

According to an embodiment, the at least one processor 1110 may obtain a participant's voice characteristic based on voice data of the participants included in the collected data. The at least one processor 1110 may predict the participant having the obtained voice characteristic using information regarding a preset reference voice characteristic. The at least one processor 1110 may determine the avatar of the predicted participant among the avatars participating in the conversation as the speaker avatar.

According to an embodiment, the at least one processor 1110 may collect voice data of the participants through the communication module 1170 when the conversation is opened and the conversation is conducted by the participants. The at least one processor 1110 may obtain and register information regarding the reference voice characteristics for each participant using the collected voice data.

According to an embodiment, the at least one processor 1110 may configure a second conversation screen at a camera angle changed based on an electrical signal provided from the display module 1120 in response to a swipe on the touch panel 1123. The at least one processor 1110 may control the display module 1120 to display the second conversation screen on the display panel 1121.

According to an embodiment, the electronic device 110 may further comprise a sensor module 1160 including at least one sensor and configured to detect, at least, a motion of the electronic device 110 in a left/right or up/down direction to output an electrical sensing signal.

According to an embodiment, the at least one processor 1110 may configure a third conversation screen at a camera angle changed based on the electrical sensing signal provided from the sensor module 1160. The at least one processor 1110 may control the display module 1120 to display the third conversation screen on the display panel 1121.

According to an embodiment, the at least one processor 1110 may configure a fourth conversation screen at a field-of-view changed based on the collected data. The at least one processor 1110 may control the display module 1120 to display the fourth conversation screen on the display panel 1121.

According to an embodiment, the at least one processor 1110 may control the display module 1120 to display a fifth conversation screen provided by a first field-of-view according to a zoom-in on the display panel 1121 in response to a swipe on the touch panel 1123 or the speaking time of the specific avatar not exceeding the threshold time.

According to an embodiment, the at least one processor 1110 may control the display module 1120 to display a sixth conversation screen provided by a second field-of-view according to a zoom-out in response to a swipe on the touch panel 1123 or the speaking time of the specific avatar exceeding the threshold time.

According to an embodiment, the at least one processor 1110 may obtain a facial expression or gesture from the user's image captured by the front camera included in the camera module 1150. The at least one processor 1110 may control the display module 1120 to mirror the obtained facial expression or the obtained gesture to the user's avatar included in the conversation screen displayed on the display panel 1121.

According to an embodiment, the at least one processor 1110 may obtain the participants' facial expression or gesture from the collected data. The at least one processor 1110 may control the display module 1120 to mirror the obtained facial expressions or gestures of the participants to the participant's avatar included in the conversation screen displayed on the display panel 1121.

According to an embodiment, the at least one processor 1110 may adjust the field-of-view considering the number of participants. The at least one processor 1110 may control the display module 1120 to display the seventh conversation screen provided by the adjusted field-of-view.

According to an embodiment, upon detecting the user's touch on the avatar of one of the participants through the touch panel 1123, the at least one processor 1110 may transmit a signal to invoke the external electronic device 130 corresponding to the touched avatar through the communication module 1170.

According to an embodiment, the at least one processor 1110 may extract images corresponding to the conversation based on the collected data. The at least one processor 1110 may generate a conversation record image using the extracted images and store the generated conversation record image.

According to an embodiment, a method for providing a conversation function using an avatar in an electronic device (e.g., the electronic device 110 of FIG. 1) may comprise outputting (610 and 640, 710 and 730, 810 and 880 or 910 and 950) a first conversation screen using an avatar based on data collected from an external electronic device 120 or 130 based on a network environment. The method may comprise identifying (1013) a speaker among participants based on the collected data. The method may comprise configuring (1025) a second conversation screen by changing a camera angle with respect to a speaker avatar corresponding to the identified speaker. The method may comprise switching (1025) the first conversation screen to the second conversation screen and outputting the second conversation screen.

According to an embodiment, identifying the speaker may include obtaining a participant's voice characteristic based on voice data of the participants included in the collected data. Identifying the speaker may include predicting the participant having the obtained voice characteristic using information regarding a preset reference voice characteristic. Identifying the speaker may include determining the avatar of the predicted participant among the avatars participating in the conversation as the speaker avatar.

According to an embodiment, the method may comprise collecting the participants' voice data if the chat room is opened, and a conversation is conducted by the participants. The method may comprise obtaining and registering information regarding the reference voice characteristics for each participant using the collected voice data.

According to an embodiment, the method may comprise configuring (1013 or 1025) a third conversation screen at a camera angle changed in response to the user's swipe. The method may comprise switching (1025) the conversation screen to the third conversation screen and outputting the third conversation screen.

According to an embodiment, the method may comprise configuring (1013) a fourth conversation screen at a camera angle changed based on a motion of the electronic device 110 in a left/right or up/down direction. The method may comprise switching (1025) the conversation screen to the fourth conversation screen and outputting the fourth conversation screen.

According to an embodiment, the method may comprise configuring (1015) the fifth conversation screen in a field-of-view changed based on the collected data. The method may comprise switching (1027) the conversation screen to the fifth conversation screen and outputting the fifth conversation screen.

According to an embodiment, the method may comprise outputting (1015 or 1027) a sixth conversation screen provided by a first field-of-view according to a zoom-in in response to the user's swipe or a speaking time of a specific avatar not exceeding a threshold time. The method may comprise outputting (1015 or 1027) a seventh conversation screen provided by a second field-of-view according to a zoom-out in response to the user's swipe or the speaking time of the specific avatar exceeding the threshold time.

According to an embodiment, the method may comprise obtaining (1017) a facial expression or gesture from the user's image captured by the front camera. The method may include mirroring (1029) the obtained facial expression or the obtained gesture to the user's avatar included in the conversation screen.

According to an embodiment, the method may comprise obtaining (1017) facial expressions or gestures of the participants from the collected data. The method may comprise mirroring (1029) the obtained facial expressions of the participants or the obtained gestures of the participants to the avatars of the participants included in the conversation screen.

According to an embodiment, the method may comprise adjusting (1019) a field-of-view considering the number of participants. The method may comprise outputting (1031) an eighth conversation screen provided by the adjusted field-of-view.

According to an embodiment, the method may comprise, upon detecting the user's touch on a specific avatar on the conversation screen, transmitting (1021 or 1033) to invoke an external electronic device corresponding to the touched avatar.

According to an embodiment, the method may comprise extracting (1023 or 1035) images corresponding to the conversation based on the collected data. The method may comprise generating (1035) a conversation record image using the extracted images. The method may comprise storing (1035) the generated conversation record image.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., the memory 1180) that is readable by a machine (e.g., the electronic device 110). For example, a processor (e.g., the processor 1110) of the machine (e.g., the electronic device 110) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (110) comprising:
a camera module (1150) including a front camera and configured to output an electrical signal obtained by capturing a subject;
a display module (1120) including a display panel (1121) or a touch panel (1123) and configured to display an image on the display panel (1121) or output an electrical signal according to a touch on the touch panel (1123);
a communication module (1170) configured to perform communication with an external electronic device (120 or 130) based on a network environment; and
at least one processor (1110) configured to control an operation of the camera module (1150), the display module (1120), or the communication module (1170) by an electrical connection with the camera module (1150), the display module (1120), or the communication module (1170), wherein the at least one processor (1110) is configured to control the display module (1120) to:
display an avatar of at least one participant among a plurality of participants including a user of the electronic device (110) in a virtual space provided for a conversation function;
display an utterance indicator indicating an utterance state in response to an utterance of at least one speaker among the plurality of participants; and
display the avatar whose gaze is changed in the virtual space based on the utterance of the at least one speaker.

2. The electronic device (110) of claim 1, wherein the at least one processor (1110) is configured to:
control the display module (1120) to display a second avatar to represent at least one other participant in a gazing direction of a first avatar representing the user, around the first avatar in the virtual space, and
change at least one of an angle, a field-of-view, or a focal position of a virtual camera to be considered to display the first avatar or the second avatar in the virtual space, or the virtual space, considering the number of the plurality of participants.

3. The electronic device (110) of claim 1, wherein the at least one processor (1110) is configured to control the display module (1120) to display a plurality of avatars at different depths in the virtual space when the plurality of avatars are displayed in the virtual space.

4. The electronic device (110) of claim 1, wherein the at least one processor (1110) is configured to:
identify a speaker switch among the plurality of participants based on data collected from the external electronic device (120 or 130) through the communication module (1170);
configure a first conversation screen at a camera angle changed with respect to a speaker avatar corresponding to the switched speaker; and
control the display module (1120) to display the first conversation screen.

5. The electronic device (110) of claim 4, wherein the at least one processor (1110) is configured to:
obtain a voice characteristic for each participant based on voice data included in the collected data; and
determine the speaker avatar using information about a preset reference voice characteristic and the obtained voice characteristic.

6. The electronic device (110) of claim 4 or 5, wherein the at least one processor (1110) is configured to:
configure a second conversation screen at a camera angle changed based on an electrical signal provided from the display module (1120) in response to a swipe on the touch panel (1123); and
control the display module (1120) to display the second conversation screen.

7. The electronic device (110) of claim 4 or 5, further comprising a sensor module (1160) including at least one sensor and configured to detect, at least, a motion of the electronic device (110) in a left/right or up/down direction to output an electrical sensing signal, wherein the at least one processor (1110) is configured to:
configure a third conversation screen at a camera angle changed based on the electrical sensing signal provided from the sensor module (1160); and
control the display module (1120) to display the third conversation screen.

8. The electronic device (110) of claim 4, wherein the at least one processor (1110) is configured to:
control the display module (1120) to display a fourth conversation screen provided by a first field-of-view according to a zoom-in in response to a swipe on the touch panel (1123) or a speaking time of a specific avatar not exceeding a threshold time;
control the display module (1120) to display a fifth conversation screen provided by a second field-of-view according to a zoom-out in response to a swipe on the touch panel (1123) or the speaking time of the specific avatar exceeding the threshold time;
obtain a facial expression or gesture from the user's image captured by the front camera included in the camera module (1150) or obtain a facial expression or gesture of the other participant from the collected data; and
control the display module (1120) to mirror the obtained facial expression or the obtained gesture to the user's avatar or the other participant's avatar.

9. The electronic device (110) of claim 1, wherein the at least one processor (1110) is configured to:
upon detecting the user's touch on the avatar through the touch panel (1123), control the communication module (1170) to transmit a signal to invoke an external electronic device (130) corresponding to the touched avatar;
extract images corresponding to a conversation between the plurality of participants conducted in the virtual space; and
generate and store a conversation record image using the extracted images.

10. A method for providing a conversation function using an avatar in an electronic device, the method comprising:
displaying an avatar of at least one participant among a plurality of participants including a user of the electronic device in a virtual space provided for the conversation function;
displaying an utterance indicator indicating an utterance state in response to an utterance of at least one speaker among the plurality of participants; and
displaying the avatar whose gaze is changed in the virtual space based on the utterance of the at least one speaker.

11. The method of claim 9, wherein displaying the avatar includes:
displaying a second avatar to represent at least one other participant in a gazing direction of a first avatar representing the user, around the first avatar in the virtual space; and
changing at least one of an angle, a field-of-view, or a focal position of a virtual camera to be considered to display the first avatar or the second avatar in the virtual space, or the virtual space, considering the number of the plurality of participants.

12. The method of claim 9, wherein displaying the avatar includes displaying a plurality of avatars at different depths in the virtual space when the plurality of avatars are displayed in the virtual space.

13. The method of claim 9, further comprising:
identifying (1013) a speaker switch among the plurality of participants based on data collected from the external electronic device (120 or 130) based on a network environment;
configuring (1025) a first conversation screen by changing a camera angle with respect to a speaker avatar corresponding to the identified speaker; and
displaying (1025) the first conversation screen.

14. The method of claim 13, further comprising:
obtaining a voice characteristic for each participant based on voice data included in the collected data; and
determining the speaker avatar using information about a preset reference voice characteristic and the obtained voice characteristic.

15. The method of claim 13 or 14, further comprising:
configuring (1013 or 1025) a second conversation screen at a camera angle changed in response to the user's swipe; and
displaying (1025) the second conversation screen.

16. The method of claim 13 or 14, further comprising:
configuring (1013) a third conversation screen at a camera angle changed based on a motion of the electronic device (110) in a left/right or up/down direction; and
displaying (1027) the third conversation screen.

17. The method of claim 13, further comprising:
outputting (1015 or 1027) a fourth conversation screen provided by a first field-of-view according to a zoom-in in response to the user's swipe or a speaking time of a specific avatar not exceeding a threshold time;
outputting (1015 or 1027) a fifth conversation screen provided by a second field-of-view according to a zoom-out in response to the user's swipe or the speaking time of the specific avatar exceeding the threshold time;
obtaining (1017) a facial expression or gesture from the user's image captured by a front camera or the other participant's facial expression or gesture from the collected data; and
mirroring (1029) the obtained facial expression or the obtained gesture to the user's avatar or the other participant's avatar.

18. The method of claim 9, further comprising:
upon detecting the user's touch on the avatar, transmitting (1021 or 1033) a signal to invoke an external electronic device (130) corresponding to the touched avatar; and
extracting images corresponding to a conversation between the plurality of participants conducted in the virtual space and generating and storing (1035) a conversation record image using the extracted images.
